(19) Europäisches Patentamt
European Patent Office
Office européen des brevets

(11) **EP 4 751 859 A1**

(12) **EUROPEAN PATENT APPLICATION**
published in accordance with Art. 153(4) EPC

(43) Date of publication:
**03.06.2026 Bulletin 2026/23**

(21) Application number: **24874060.7**

(22) Date of filing: **23.09.2024**

(51) International Patent Classification (IPC):
**B25J 9/16** (2006.01)

(52) Cooperative Patent Classification (CPC):
**B25J 9/16; B25J 17/02**

(86) International application number:
**PCT/CN2024/120249**

(87) International publication number:
**WO 2025/073242 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.10.2023 CN 202311299143**

(71) Applicant: **Tencent Technology (Shenzhen)
Company Limited
Shenzhen, Guangdong 518057 (CN)**

(72) Inventors:
• **HUANG, Yihao**
**Shenzhen, Guangdong 518057 (CN)**
• **WANG, Shuai**
**Shenzhen, Guangdong 518057 (CN)**

(74) Representative: **Reddie & Grose LLP
The White Chapel Building
10 Whitechapel High Street
London E1 8QS (GB)**

(54) **METHOD AND APPARATUS FOR CONTROLLING ROBOTIC ARM, AND DEVICE, STORAGE MEDIUM AND PROGRAM PRODUCT**

(57) A method for controlling a robotic arm, relating to the technical fields of robots and automatic control. The method comprises: acquiring historical-data pairs at N moments, wherein each historical-data pair comprises historical input data and historical output data, the historical input data is used for controlling a robotic arm (220) to move, such that a first object (210) is kept in a balanced state on the robotic arm (220), and the historical output data is used for representing a pose of the robotic arm (220) and a pose of the first object (210) after the robotic arm (220) is controlled, on the basis of the historical input data, to move, N being a positive integer; on the basis of the historical-data pairs at the N moments, determining predicted input data of the robotic arm (220); and on the basis of the predicted input data, controlling the robotic arm (220) to move, wherein the first object (210) maintains balance during the motion of the robotic arm (220). The prediction of a future system state of the robotic arm (220) is performed on the basis of historical data, and does not only rely on feedback variables of a robotic arm system, so that a control response is faster. Further provided are a robotic arm control apparatus, and a device and a storage medium.

Obtain N previous input-output pairs, each for a respective one of N different previous moments, where each of the previous input-output pairs comprises a previous input and a previous output, the previous input is configured for controlling movement of a robotic arm, so as to keep a first object to be balanced on the robotic arm, the previous output represents a first pose of the robotic arm and a second pose the first object after the movement of the robotic arm, and N is a positive integer — 110

Determine a predicted input for controlling the robotic arm, according to the N previous input-output pairs — 120

Control, using the predicted input, the movement of the robotic arm in a preset time period after the current moment, so as to keep the first object balanced during the movement of the robotic arm in the time period — 130

FIG. 1

**Description**

This application claims priority to Chinese Patent Application No. 2023112991432 filed with the China National Intellectual Property Administration on October 7, 2023, and entitled "METHOD AND APPARATUS FOR CONTROLLING ROBOTIC ARM, DEVICE, STORAGE MEDIUM, AND PROGRAM PRODUCT".

FIELD OF TECHNOLOGY

Embodiments of the present disclosure relate to the technical field of robots and automatic control, and in particular, to control of robotic arms.

BACKGROUND OF THE DISCLOSURE

Robots are automatic machines that can simulate human operations. The robot may be a robotic arm that simulates actions of a human arm.

In related art, tactile information generated by a bottle on a robotic arm may be processed to obtain a position of the bottle on the robotic arm, and then a velocity of the bottle is obtained through a differential method. The position of the bottle on the robotic arm and the velocity of the bottle may serve as inputs of a proportional integral differential (PID) controller, and a rotation angle of a joint of the robotic arm may serve as an output of the PID controller. Thereby, the controller can keep the balance of the bottle on the robotic arm.

In the above scheme, the PID controller relies only on variables fed back by the robotic arm, which results in delay of responses.

SUMMARY

Embodiments of the present disclosure provide a method and an apparatus for controlling a robotic arm, a device, a robot, a storage medium, and a program product. The technical solutions are as follows.

According to an aspect of embodiments of the present disclosure, a method for controlling a robotic arm is provided. The method comprises: obtaining N respective previous input-output pairs of N different previous moments, where each of the previous input-output pairs comprises a previous input and a previous output, the previous input is configured for controlling movement of a robotic arm, the movement of the robotic arm is configured for keeping a first object to be balanced on the robotic arm, the previous output represents a first pose of the robotic arm and a second pose the first object, which are after the movement of the robotic arm, and N is a positive integer; determining a predicted input for controlling the robotic arm according to the N previous input-output pairs; and controlling, using the predicted input, the movement of the robotic arm in a preset time period after the current moment, so as to keep the first object balanced during the movement of the robotic arm in the time period.

According to an aspect of embodiments of the present disclosure, an apparatus for controlling a robotic arm is provided. The apparatus comprises: an obtaining module, configured for obtaining N respective previous input-output pairs of N different previous moments, where each of the previous input-output pairs comprises a previous input and a previous output, the previous input is configured for controlling movement of a robotic arm, so as to keep a first object to be balanced on the robotic arm, the previous output represents a first pose of the robotic arm and a second pose the first object, which are after the movement of the robotic arm, and N is a positive integer; a determining module, configured for determining a predicted input for controlling the robotic arm according to the N previous input-output pairs; and a controlling module configured for controlling, using the predicted input, the movement of the robotic arm in a preset time period after the current moment, so as to keep the first object balanced during the movement of the robotic arm in the time period.

According to an aspect of embodiments of the present disclosure, a robotic arm is provided. The robot arm comprises processor and a memory, the memory stores a computer program, and the computer program when loaded and executed by the processor implements the method for controlling the robotic arm.

According to an aspect of embodiments of the present disclosure, a computer-readable storage medium is provided. The computer-readable storage medium stores a computer program, and the computer program when loaded and executed by the processor implements the method for controlling the robotic arm.

According to an aspect of embodiments of the present disclosure, a computer program product is provided. The computer program product comprises a computer program, the computer program is stored in a computer-readable storage medium, and the computer program when read from the computer-readable storage medium and executed by a processor of a robot causes the robot to perform the method for controlling the robotic arm.

The technical solutions provided in embodiments of the present disclosure may have the following beneficial effects:

Herein previous input-output pairs of multiple moments are obtained, the predicted input of the robotic arm is predicted accordingly, and the movement of the robotic arm is controlled using the predicted input to balance the first object on the robotic arm. Thus, the future system state of the robotic arm is predicted according to previous data, and the control does not depend only on the variables fed back by the robotic arm system. A response to a control command is faster.

BRIEF DESCRIPTION OF THE DRAWINGS

FIG. 1 is a flowchart of a method for controlling a robotic arm according to an embodiment of the present disclosure.

FIG. 2 is a schematic diagram of a task of balancing a first object on a robotic arm according to an embodiment of the present disclosure.

FIG. 3 is a schematic diagram of a task of balancing a first object on a robotic arm according to another embodiment of the present disclosure.

FIG. 4 is a schematic diagram of a method for controlling a robotic arm according to an embodiment of the present disclosure.

FIG. 5 is a simplified schematic diagram of a dynamics model according to an embodiment of the present disclosure.

FIG. 6 is a block diagram of a method for controlling a robotic arm using a dynamics model according to an embodiment of the present disclosure.

FIG. 7 is a schematic diagram of a coordinate system of a robotic arm according to an embodiment of the present disclosure.

FIG. 8 is a schematic diagram of a process for controlling a robotic arm according to an embodiment of the present disclosure.

FIG. 9 is a schematic diagram of a 7-degree-of-freedom robotic arm according to an embodiment of the present disclosure.

FIG. 10 is a schematic diagram of a 3-degree-of-freedom shoulder joint according to an embodiment of the present disclosure.

FIG. 11 is a schematic diagram of a shoulder joint according to an embodiment of the present disclosure.

FIG. 12 is a front view and a side view of a differential mechanism according to an embodiment of the present disclosure.

FIG. 13 is a schematic diagram of an implementation of a differential mechanism according to an embodiment of the present disclosure.

FIG. 14 is a cross-sectional view of a differential mechanism according to an embodiment of the present disclosure.

FIG. 15 is a schematic diagram of a driving module of an upper arm according to an embodiment of the present disclosure.

FIG. 16 is a schematic diagram of motor driving modules of a wrist joint and an elbow joint according to an embodiment of the present disclosure.

FIG. 17 is a cross-sectional view of a connection of a middle shaft according to an embodiment of the present disclosure.

FIG. 18 is a block diagram of an apparatus for controlling a robotic arm according to an embodiment of the present disclosure.

FIG. 19 is a block diagram of an apparatus for controlling a robotic arm according to another embodiment of the present disclosure.

FIG. 20 is a block diagram of a robot according to an embodiment of the present disclosure.

DESCRIPTION OF EMBODIMENTS

Exemplary embodiments are described in detail herein, and examples of the exemplary embodiments are shown in the accompanying drawings. When the following description involves the accompanying drawings, unless otherwise indicated, the same numerals in different accompanying drawings represent same or similar elements. The implementations described in the following exemplary embodiments do not represent all implementations that are consistent with the present disclosure. On the contrary, the implementations are merely examples of methods that are described in detail in the appended claims and that are consistent with some aspects of the present disclosure.

A robotic arm is widely used in industrial production and academic research. Generally, an end of the robotic arm or a mechanical arm is utilized to complete some operation tasks. A member for connecting rigid bodies and housing of the robotic arm are scarcely jointly used to complete the operation tasks, and the housing of the robotic arm alone is also scarcely utilized to complete the operation tasks. Main reasons are as follows.

(1) An outer surface of the robotic arm is usually curved and does not have a large plane.

(2) A graspable mechanism such as a hand is not designed on these parts and contact between the outer surface of the robotic arm and an external object does not constitute an enclosure in shape or force, causing great control difficulties.

(3) The housing of the robotic arm usually has no tactile perception, and hence there is no perception feedback for implementing control.

Different from related art, embodiments of the present disclosure render the following scheme possible. An object placed on housing of the lower arm of the robotic arm is balanced and is prevented from sliding off the lower arm. The implementation comprises following aspects.

(1) Design of a control architecture

(2) Application of a tactile sensor

(3) Design of a controller

In the method provided herein, operations may be performed by a computer device. The computer device may be a device configured to control a robotic arm or may be a robotic arm. When the computer device is a robotic arm, the robotic arm is an electronic device having capabilities of data calculation, processing, and storage. The robotic arm provided in embodiments of the present disclosure may be used in scenarios such as industry (for example, an industrial robot), service (for example, a dish serving robot), entertainment (for example, a performing robot), or medical treatment (for example, a medical robot). The present disclosure is not limited to the above examples.

Solutions provided in embodiments of the present disclosure relate to technology such as automatic control using artificial intelligence (AI) to implement control of the robotic arm. Details are described hereinafter.

In related art, a PID may serve as a controller, and tactile information of a bottle on a robotic arm is processed to obtain a position of the bottle, and then a velocity of the bottle is obtained through a differential method. The position and the velocity may serve as an input of the PID controller, and a rotation angle of a joint of the robotic arm may serve as an output of the PID controller. Thus, the PID controller can complete a task of balancing the bottle.

The above scheme using the PID controller has following limitations.

(1) The PID controller is sensitive to external interference and noise, which may cause degradation of control performance.

(2) The PID controller can only process a single variable, and another control means needs to be used for a multi-variable system.

(3) The PID controller alone has no feedforward loop and responds slowly, and the PID only functions when there is an error.

(4) A velocity or even an acceleration in an input signal of the PID controller is obtained through differential calculation, which may have large errors and introduces a noise. There are large jitters in a control parameter which is calculated by the PID controller from the input signals obtained through differential calculation.

(5) The PID is a linear controller, and when a controlled system has a large nonlinear factor, the PID controller cannot control an object well.

Herein the foregoing issues are addressed through data driven model predictive control (DD MPC), such that the task of balancing an object (including but not limited to a bottle) on the robotic arm can be implemented. The following effects may be achieved.

(1) A data driven MPC controller suppresses interference of noise and has a better adaptive feature and robustness, and an output amount does not jitter due to input noise.

(2) The data driven MPC controller can simultaneously control via multiple variables.

(3) The data driven MPC can predict a future system state using previous data and does not depend only on variables fed back from the system. Therefore, the data driven MPC can response more rapidly.

(4) The data driven MPC can be performed based on some real constraints, for example, an upper limit and a lower limit of a position of a joint of the robotic arm, an upper limit and a lower limit of velocity of a joint of the robotic arm, and an upper limit and a lower limit of an acceleration of a joint of the robotic arm. Thus, a control variable output by the controller meets a requirement of limitations in reality.

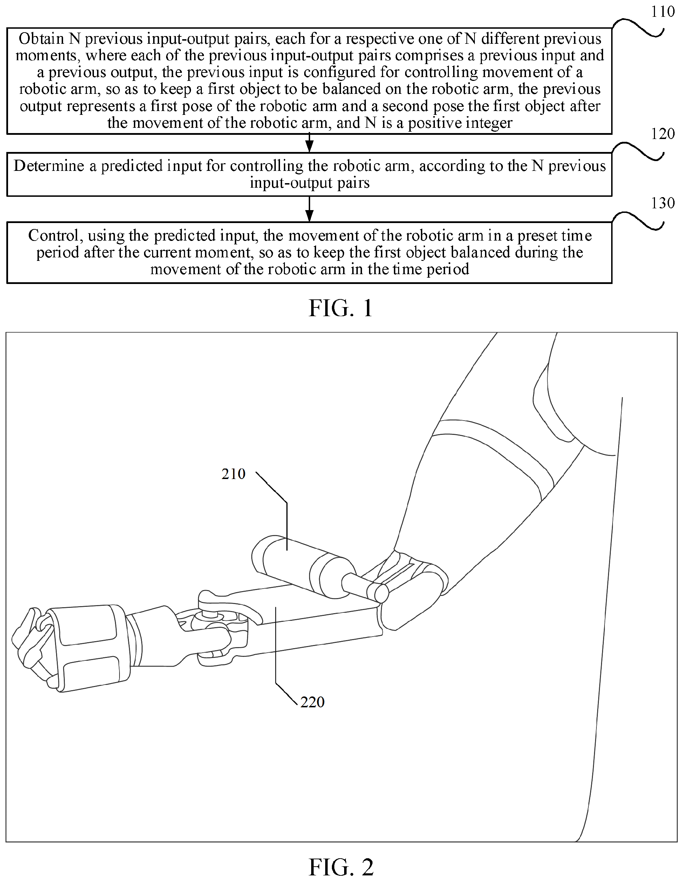

FIG. 1 is a flowchart of a method for controlling a robotic arm according to an embodiment of the present disclosure. Here embodiments are illustrated using an example in which the method is applied to a robotic arm. The method may include the following operations (110 to 130). As an example, a bottle serves as a first object placed on the robotic arm to facilitate description.

Operation 110: Obtain N respective previous input-output pairs of N different previous moments. Each of the previous input-output pairs comprises a previous input and a previous output, the previous input is configured for controlling movement of a robotic arm, so as to keep a first object to be balanced on the robotic arm, the previous output represents a first pose of the robotic arm and a second pose the first object, which are after the movement of the robotic arm, and N is a positive integer.

The "previous" moment, the "previous " input, and the "previous" output are all named with respect to a current moment (e.g., moment t). For any moment, its input is configured for controlling movement of the robotic arm at this moment, such that the first object on the robotic arm is kept in a balanced state (i.e., prevented from falling from the robotic arm), and its output represents the pose of the robotic arm and the pose of the first object that are after the movement under control of the input. Thus, the previous input may also be called "previous control data", and the previous output may also be called "previous pose data". The previous input and the previous output at the moment may be recorded as one previous input-output pair.

In embodiments of the present disclosure including the embodiments of both the claims and the specification (hereinafter referred to as "all embodiments of the present disclosure"), the N different moments may refer to N moments immediately previous to current moment.

In all embodiments of the present disclosure, for any moment t, the N respective previous input-output pairs of the N moments immediately previous to such moment may be obtained.

In all embodiments of the present disclosure, the N difference moments may be consecutive or non-consecutive among all moments having the input and the output. This is not limited herein.

In all embodiments of the present disclosure, a time interval between any two consecutive moments in the N moments may be identical. For example, N is equal to 3, and a time interval between moment 1 and moment 2 is the same as a time interval between moment 2 and moment 3.

In all embodiments of the present disclosure, movement of the robotic arm may be controlled according to the input. During the movement of the robotic arm, the first object is kept balanced on the robotic arm, that is, the first object is prevent from falling off the robotic arm.

In all embodiments of the present disclosure, a relative position between the first object and the robotic arm may be changed during the movement of the robotic arm.

The type, shape, and the like, of the first object are not limited herein. For example, the first object may be a cylindrical object such as a bottle. Alternatively, the first object may be a spherical object such as a ping-pong ball.

In all embodiments of the present disclosure, the input of any moment may comprise one or more pieces of data. This is not limited in the present disclosure. For example, the robotic arm may comprise a shoulder joint, an elbow joint, and a wrist joint, and the input may include angle(s) of rotating one or more of these joints.

In all embodiments of the present disclosure, the output of any moment may comprise one or more pieces of data. This is not limited in the present disclosure. For example, the output may comprise one or more of: an angle between the robotic arm and a horizontal plane, the position of the first object on the robotic arm, and actual angle(s) of the one or more joints in the robotic arm.

Operation 120: Determine a predicted input for controlling the robotic arm according to the N previous input-output pairs.

In all embodiments of the present disclosure, the input of the robotic arm at the current moment may be predicted using the N respective previous input-output pairs of N different previous moments, such that the predicted input of the robotic arm is obtained.

In all embodiments of the present disclosure, a DD MPC controller is used to determine the predicted input of the robotic arm using the N respective previous input-output pairs of the N different moments.

In all embodiments of the present disclosure, the predicted input may be one or more parameters for controlling the movement of the robotic arm. That is, control on the movement of the robotic arm can be determined from the predicted input. For example, the predicted input may be a torque and/or a rotation angle of a joint of the robotic arm.

The predicted input and the previous input are similar in that they are both configured for controlling movement of the robotic arm to keep the first object in the balanced state on the robotic arm. Their difference lies in their corresponding moments. The predicted input is configured for performing the control on the movement of the robotic arm at the current moment, and the previous inputs are configured for performing the control on the movement of the robotic arm at the N moments previous to the current moment.

Operation 130: Control, using the predicted input, the movement of the robotic arm in a preset time period after the current moment, so as to keep the first object balanced during the movement of the robotic arm in the time period.

In all embodiments of the present disclosure, the robotic arm may be in a first pose at the current moment, and it is in a second pose after the movement under control of the predicted input. During the movement, the first object is kept in the balanced state on the robotic arm.

In all embodiments of the present disclosure, during the movement of the robotic arm, the first object may move with respect to the robotic arm.

Here the movement of the robotic arm refers to the movement of the robotic arm relative to the ground. During movement of the robotic arm, the first object may also move relative to the ground. Since the angle of the robotic arm relative to the horizontal plane may change, the force(s) applied on the first object also changes, and the first object may move relative to the robotic arm.

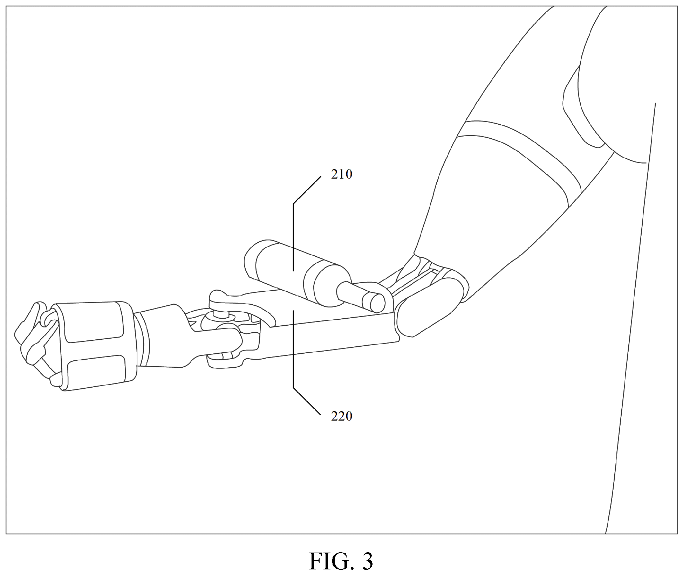

For example, as shown in FIG. 2, a first object 210 is located on a lower arm of a robotic arm 220. In this case, the robotic arm is in a first pose. The robotic arm 220 moves according to the predicted input and is in a third pose after the movement, as shown in FIG. 3. In this case, a relative position between the first object 210 and the robotic arm 220 changes.

In all embodiments of the present disclosure, a moving range of the first object on the robotic arm may comprise the entire robotic arm or only a part of the robotic arm. For example, the first object may move on the upper arm, the lower arm, and an end effector of the robotic arm. For example, the first object may move only on the lower arm of the robotic arm.

Herein previous input-output pairs of multiple moments are obtained, the predicted input of the robotic arm is predicted accordingly, and the movement of the robotic arm is controlled using the predicted input to balance the first object on the robotic arm. Thus, the future system state of the robotic arm is predicted according to previous data, and the control does not depend only on the variables fed back by the robotic arm system. A response to a control command is faster.

In all embodiments of the present disclosure, the robotic arm may be regarded as a linear time-invariant system (LTI). Basic properties of the LTI system are linearity (homogeneity and additivity), time-invariance, differentiability, and integrability.

A system parameter of the linear time-invariant system does not change with time. Therefore, when a unit impulse response is known and an input of the LTI system is determined, and corresponding output can be obtained according to a system state of the LTI system. Conversely, when the input, the output, and the system state of the LTI system are known, a unit impulse response can be obtained. Herein exemplary embodiments are provided by taking an example in which a joint (or called a rotation joint) of the robotic arm is controlled. The robotic arm is regarded as an LTI system. The process of determining the predicted input of the robotic arm may be regarded as a process of obtaining the unit impulse response. Since various errors, noise, and the like affects the robotic arm in practice, unit impulse responses obtained through different previous input-output pairs may differ from each other. Therefore, a constraint of reality needs to be regarded when solving equations for obtaining the unit impulse response, and the unit impulse response needs to be adjusted according to a feedback of the robotic arm (i.e., according to the output reflecting the second pose of the robotic arm after the robotic arm moves according to the predicted input) and an target balanced state of the robotic arm. Herein the unit impulse response is actually a sequence of unit impulse responses, and the sequence is called the unit impulse response for short.

In addition, if a plurality of joints (or called rotation joints) of the robotic arm need to be controlled, an actual model of the robotic arm needs to be specifically analyzed, and the robotic arm may not be simply regarded as an LTI system.

In all embodiments of the present disclosure, the robotic arm system may be an LTI system which can be represented as following equation (1).

$$\begin{bmatrix} H_L(u^d) \\ H_L(y^d) \end{bmatrix} \alpha = \begin{bmatrix} \overline{u} \\ \overline{y} \end{bmatrix} \tag{1}$$

$\alpha$ represents the unit impulse response, $\overline{u}$ represents the predicted input, $\overline{y}$ represents predicted output, $H_L(u^d)$ and $H_L(y^d)$ each is a hankel matrix, $L$ represents a length of prediction horizon of the robotic arm, and $u^d$ and $y^d$ represents a previous track of the robotic arm system. The previous track has an order of (L+n) and can be excited successively, that is, system states and properties represented by the track are stable. In other words, former n points (each point refers to a previous input-output pair of a moment) in the track can be used to predict L points in the future (where the n points and the L points are mapped to top n rows and bottom L rows of the hankel matrix).

In all embodiments of the present disclosure, the inputs or outputs at several moments may constitute the track as follows.

$$H_L(x) := \begin{bmatrix} x_0 & x_1 & \cdots & x_{N-L} \\ x_1 & x_2 & & x_{N-L+1} \\ \vdots & & \ddots & \vdots \\ x_{L-1} & x_L & \cdots & x_{N-1} \end{bmatrix} \tag{2}$$

x represents previous data (which may be either the previous input or the previous output), $x_{N-L}$ represents previous data of an $(N-L)^{th}$ moment, and $N$ is the total quantity of previous inputs or outputs.

In all embodiments of the present disclosure, when there are multiple categories of the previous data, a dimension of the hankel matrix is (m * L + m * n) × (N - L - n + 1). m represents the quantity of categories of the previous data, and n represents a system order of the robotic arm.

Equation (1) may be regarded as an expression of a convolution sum of a discrete LTI system in time domain. The equation may be understood as follows: any result obtained by multiplying $\alpha$ by the hankel matrix is a point belonging to the track, defined by $\overline{u}$ and $\overline{y}$, of the LTI system.

The foregoing equation implicitly represents a model of the system by using a segment of previous data of the LTI system. The model is the "M" in the MPC, i.e., the "M" in the MPC is the previous data.

In all embodiments of the present disclosure, operation 120 may be implemented as at least one of the following operations 121 to 123.

Operation 121: determine a constraint function and a cost function for the robotic arm according to the N previous input-output pairs. The constraint function represents a constraint on data, the cost function represents a difference between predicted data and balance data, the balance data comprises an input to the robotic arm and at an output presenting a pose of the robotic arm and a pose of the first object when the robotic arm and the first object arm are in a target balanced state, the predicted data comprises the predicted input and a predict output representing a predicted pose of the robotic arm and a predicted pose of the first object, and the predicted output is predicted according to the previous outputs.

In all embodiments of the present disclosure, the constraint function may be configured for describing a constraint of reality that the robotic arm needs to meet. In all embodiments of the present disclosure, the cost function may be constructed as a loss function describing a difference between the predicted data and the balance data.

In all embodiments of the present disclosure, the target balanced state may refer to a state in which the input of the robotic arm can be 0, i.e., the robotic arm does not need to move. In other words, the output of the robotic arm does not need to change with respect to the output of the immediately previous moment. For example, the first object can move on the lower arm of the robotic arm, and the target balanced state refers to a state as follows: the lower arm of the robotic arm is parallel to the horizontal plane, the first object is located at a midpoint of the lower arm of the robotic arm, and a plane formed by a centroid position of the first object and a central axis of the robotic arm is perpendicular to the horizontal plane.

In all embodiments of the present disclosure, operation 121 may be implemented as at least one of the following operations a to c.

Operation a: determine a first matrix and a second matrix. The first matrix comprises the previous inputs in the N previous input-output pairs, and the second matrix comprises the previous outputs in the N previous input-output pairs.

In all embodiments of the present disclosure, the previous inputs in the N previous input-output pairs may serve as elements in the first matrix, and the previous outputs in the N previous input-output pairs may serve as elements in the second matrix.

In all embodiments of the present disclosure, the previous inputs from the $(i-1)^{th}$ moment to the $(N-L-n+i-1)^{th}$ moment in the N moments may serve as the elements in the $i^{th}$ row of the first matrix, and the previous outputs from the $(i-1)^{th}$ moment to the $(N-L-n+i-1)^{th}$ moment in the N moments may serve as the elements in the $i^{th}$ row of the second matrix, where i is a positive integer.

In all embodiments of the present disclosure, the first matrix may refer to $H_L(u^d)$ in Equation (1), and the second matrix refers to $H_L(y^d)$ in Equation (1).

Operation b: Determine the constraint function of the robotic arm according to top n rows in the first matrix and top n rows in the second matrix, where n is a system order of the robotic arm and is a positive integer.

In all embodiments of the present disclosure, there may be one or more constraint functions, because the constraint functions may need describe constraints of reality on the robotic arm.

In all embodiments of the present disclosure, the constraint function may comprise a first constraint function, a second constraint function, a third constraint function, and a fourth constraint function.

In all embodiments of the present disclosure, the first constraint function may be constructed using a slack variable. The slack variable represents measurement noise, and the first constraint function is configured for limiting interference of the measurement noise on the predicted input.

Here the slack variable is introduced because there is measurement noise in practice. The objective of introducing the slack variable is to allow y having measurement noise to appear in the hankel matrix equation (Equation (1)) while ensuring that the equation stands (note that an equation on a basis of idea hankel matrices does not consider noise).

In all embodiments of the present disclosure, the first constraint function may be represented by equation (3) as follows.

$$\begin{bmatrix} \bar{u}(t) \\ \bar{y}(t) + \sigma(t) \end{bmatrix} = \begin{bmatrix} H_{L+n}(u^d) \\ H_{L+n}(\tilde{y}^d) \end{bmatrix} \alpha(t) \qquad (3)$$

$\sigma(t)$ represents the slack variable, $\bar{u}(t)$ represents the predicted input, $\bar{y}(t)$ represents the predicted output, $\alpha(t)$ represents the unit impulse response, $H_{L+n}(u^d)$ represents the hankel matrix formed by the previous inputs of the N moments, and $H_{L+n}(\tilde{y}^d)$ represents the hankel matrix formed by the previous outputs of the N moments. N may be equal to L+n.

In all embodiments of the present disclosure, the second constraint function may be constructed using the top n rows in the first matrix and the top n rows in the second matrix. The second constraint function is configured for limiting the previous input-output pairs at n moments in the N moments.

Here the second constraint function may be configured for describing a constraint as follows. The predicted inputs $\bar{u}$ and the predicted outputs $\bar{y}$ obtained for the $-n^{th}$ to $-1^{st}$ (counted with respect to a certain moment t, such as the current moment, serving as the $0^{th}$ moment) moments of the LTI system serve as the newest n previous input-output pairs of the LTI system for the moment t. This constraint may be regarded as describing the history LTI track with a length of n.

In all embodiments of the present disclosure, the second constraint function may be represented by equation (4) as follows.

$$\begin{bmatrix} \bar{u}_{[-n,-1]}(t) \\ \bar{y}_{[-n,-1]}(t) \end{bmatrix} = \begin{bmatrix} u_{[t-n,t-1]} \\ \tilde{y}_{[t-n,t-1]} \end{bmatrix} \qquad (4)$$

$\bar{u}_{[-n,-1]}(t)$ represents the predicted inputs obtained for the $-n^{th}$ to $-1^{st}$ moments with respect to the moment $t$, $\bar{y}_{[-n,-1]}(t)$ represents the predicted outputs for the $-n^{th}$ to $-1^{st}$ moments with respect to the moment $t$, $u_{[t-n,t-1]}$ represents the newest n previous inputs for the moment $t$, and $\tilde{y}_{[t-n,t-1]}$ represents the newest n previous outputs for the moment $t$.

In all embodiments of the present disclosure, the third constraint function is constructed using the top n rows in the first matrix, the top n rows in the second matrix, and the balance data. The third constraint function is configured to limit that the robotic arm approximates the target balanced state gradually over time.

Here, the third constraint function may be a constraint representing a quadratic programming issue in the data driven MPC controller. This equity constraint is also called a terminal equality constraint. The terminal equality constraint is generally for limiting a final value of an optimized variable during optimization to be equal to a specific target value. For example, the system needs to be in a specific target state in a control task. Here the robotic arm needs to be approximately in the target balanced state.

In all embodiments of the present disclosure, the third constraint function may be represented by equation (5) as follows.

$$\begin{bmatrix} \bar{u}_{[L-n,L-1]}(t) \\ \bar{y}_{[L-n,L-1]}(t) \end{bmatrix} = \begin{bmatrix} u_n^s \\ y_n^s \end{bmatrix}, \bar{u}_k(t) \in U \tag{5}$$

$\bar{u}_{[L-n,L-1]}(t)$ represents the predicted inputs of the LTI system and these inputs are of moments from the $(L-n)^{th}$ moment to the $(L-1)^{th}$ moment (where the moment t is regarded the $0^{th}$ moment), $\bar{y}_{[L-n,L-1]}(t)$ represents the predicted outputs of the LTI system and these outputs are of moments from the $(L-n)^{th}$ moment to the $(L-1)^{th}$ moment (where the moment t is regarded the $0^{th}$ moment), and $u_n^s$ and $y_n^s$ represent data of a balance state of the LTI system for n moments. s represents the balance state, and n means that the balance state are represented by a column vector with a length of n.

Because a future track from the $(L-n)^{th}$ moment to the $(L-1)^{th}$ moment with respect to the current moment is unknown, prediction can be performed only based on a property of the LTI system and the successive excitation (i.e., the previous data). Therefore, during, a track of the newest n previous input-output pairs is updated in real time, and this equality constraint is update according. The "terminal" in the terminal equality constraint may be understood as a state that the system finally reaches, that is, the balance state. The terminal equality constraint may be written, using the hankel matrix equation of the LTI system, into a form of the hankel matrix multiplied by $\alpha$. In this way, the terminal equality constraint is converted into an equation concerning $\alpha$.

In all embodiments of the present disclosure, the balance state may be an target balanced state.

In all embodiments of the present disclosure, the target balanced state for each moment is the same.

In all embodiments of the present disclosure, the fourth constraint function is constructed using the slack variable, a first threshold, and the unit impulse response. The first threshold is an upper limit of the slack variable, and the fourth constraint function is configured for limiting that the predicted input converges.

In all embodiments of the present disclosure, the fourth constraint function may represented by equation (6) as follows.

$$\|\sigma_k(t)\|_\infty \leq \bar{\varepsilon}(1 + \|\alpha(t)\|_1), k \in \mathrm{II}_{[0,L-1]} \tag{6}$$

$\sigma_k(t)$ represents the slack variable, $\bar{\varepsilon}$ represents the upper limit of the slack variable, namely, the first threshold, and $\alpha(t)$ represents the unit impulse response.

When $\lambda_\sigma$ is selected to be large enough, the fourth constraint function can be absolutely satisfied, because a regularization term of $\sigma$ becomes very small due to penalty from $\lambda_\sigma$. Therefore, this inequality constraint may not be considered in the quadratic programming issue. $\lambda_\sigma$ represents a penalty weight for the slack variable.

Operation c: determine the cost function of the robotic arm according to bottom L rows in the first matrix and bottom L rows in the second matrix. L represents a length of prediction horizon of the robotic arm and is a positive integer.

In all embodiments of the present disclosure, a function of a first norm may be determined using the bottom L rows in the first matrix and the bottom L rows in the second matrix. The first norm comprises a square Euclidean norm of the previous inputs at latter L moments in the N moments and a square Euclidean norm of the previous outputs at the latter L moments in the N moments. A function of a first penalty is determined according to a first penalty weight, a first threshold, and a first regularization term. The first regularization term represents a regularization penalty due to the unit impulse response, the first penalty weight is a weight for the first regularization term, the first threshold is an upper limit of a slack variable, and the slack variable represents measurement noise. A function of a second penalty is determined according to a second penalty weight and a second regularization term. The second regularization term represents a regularization penalty due to the slack variable, and the second penalty weight is a weight for the second regularization term. The cost function is determined according to the function of the first norm, the function of the first penalty, and the function of the second penalty.

In all embodiments of the present disclosure, for each n+L sequential moments, data pairs of inputs and outputs at n moments may be configured for predicting data pairs of inputs and outputs at latter L moments.

In all embodiments of the present disclosure, the cost function is represented by equation (7) as below.

$$J_L^*\big(u_{[t-n,t-1]}, \tilde{y}_{[t-n,t-1]}\big) =$$

$$\min_{\substack{\alpha(t),\sigma(t) \\ \bar{u}(t),\bar{y}(t)}} \sum_{k=0}^{L-1} Lim\big(\bar{u}_k(t), \bar{y}_k(t)\big) + \lambda_\alpha \bar{\varepsilon}\|\alpha(t)\|_2^2 + \lambda_\sigma \|\sigma(t)\|_2^2 \qquad (7)$$

$$Lim(\bar{u}, \bar{y}) = \|\bar{u} - u^s\|_R^2 + \|\bar{y} - y^s\|_Q^2$$

$Lim(\bar{u}, \bar{y})$ represents the square Euclidean norms between the inputs and input values of the balance state and the square Euclidean norms between the outputs and output values of the balance state, R represents a penalty weight matrix of the square Euclidean norm between the inputs and the input values of the balance state, and Q represents a penalty weight matrix of the square Euclidean norm between the outputs and the output values of the balance state.

$\lambda_\alpha \bar{\varepsilon}\|\alpha(t)\|_2^2$ represents a regularization penalty for $\alpha$. It aims to avoid overfitting in a process of the quadratic programming and reduce an equation error caused by the hankel matrix. $\lambda_\alpha$ represents a penalty weight for this regularization term, and $\bar{\varepsilon}$ represents the upper limit of the slack variable. $\lambda_\sigma\|\sigma(t)\|_2^2$ represents a regularization penalty for the slack variable $\sigma$. $\lambda_\sigma$ represents a penalty weight for this regularization term. The slack variable is often used to change an inequality constraint in optimization into an equality constraint, so that a feasible solution domain in the optimization is larger, and the solving process is simpler. Finally, the hankel matrix equation that can implicitly represent the LTI system model is applied to replace the data sequences of u and y in the cost function (here bottom L rows of the hankel matrix are used to ensure that matrix dimensions on both sides of the equation match). Thereby, the cost function is converted into an equation comprising $\alpha$.

Operation 122: calculate a unit impulse response of the robotic arm through the constraint function and the cost function. A reaction of the robotic arm to the predicted input depends on the predicted input and the unit impulse response.

As describe above, both the cost function and the constraint function can be converted into functions comprising $\alpha$. Hence, this operation is finding $\alpha$ that minimizes the cost function and satisfies the above equality constraint and one or more other constraints.

Operation 123: determine the predicted input of the robotic arm at the current moment according to the unit impulse response.

In all embodiments of the present disclosure, the predicted input of the robotic arm may be determined according to the unit impulse response and the previous input pairs of the N moments.

In all embodiments of the present disclosure, a third matrix may be determined according to the N previous input-output pairs. The third matrix comprises a first matrix and a second matrix, the first matrix comprises the previous inputs in the N previous input-output pairs, and the second matrix comprises the previous outputs in the N previous input-output pairs. The predicted input of the robotic arm at the current moment is determined according to the unit impulse response and the third matrix.

In all embodiments of the present disclosure, the third matrix may be the hankel matrices at the left side of equation (1) as illustrated above, and the predicted input is $\bar{u}$ at the left side of equation (1) as illustrated above.

Hence, the task of balancing the first object on the robotic arm is regarded as a task of solving equations representing the discrete LTI system. The unit impulse response of the LTI system is first obtained through solving the constraint function and the cost function, and the predicted input of the robotic arm is obtained according to the unit impulse response. The scheme is simple and considers constraints of the reality, and the obtained predicted input meets the requirement of reality. In addition, the measurement noise on the output may be represented by the slack variable, i.e., the impact of the noise is also considered. Both the adaptability and robustness are improved.

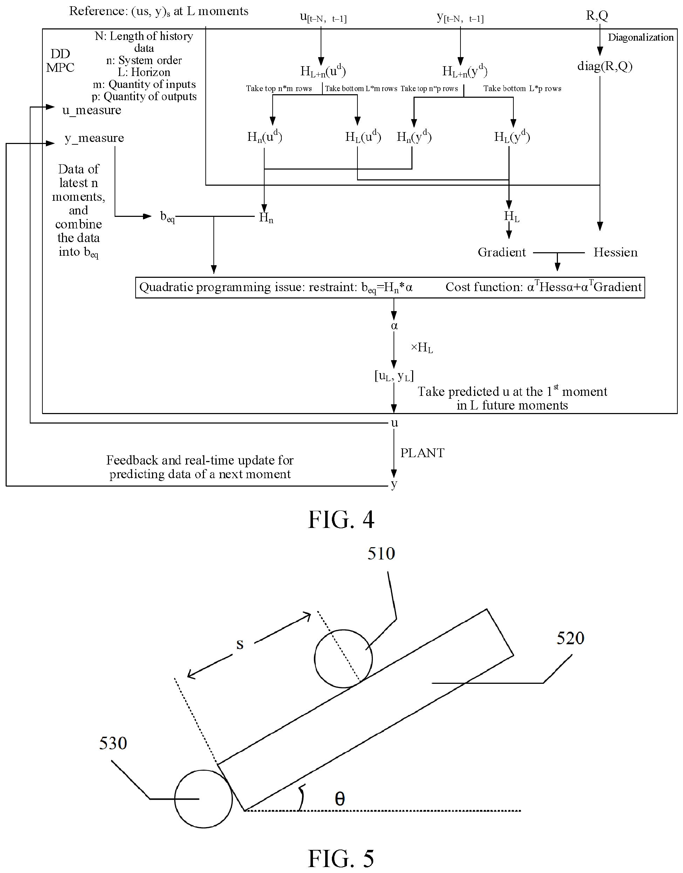

FIG. 4 is an operation flowchart of a DD MPC controller according to an embodiment of the present disclosure. First, a previous track having a length of N, of the system, is obtained. Second, the hankel matrices are constructed using the previous track. Third, the hankel matrices (where each hankel matrix is decomposed into top n rows and bottom L rows in the hankel matrix, the top n rows are configured for forming the terminal equality constraint, and the last L columns are configured for forming a Hessien matrix and a gradient matrix for g the quadratic programming issue), a reference matrix, and RQ penalty weight matrices are substituted into the cost function and the terminal equality constraint to construct the quadratic programming issue concerning $\alpha$. Fourth, a quadratic programming solver (for example, qpOASES) is utilized for solving the quadratic programming issue, where $\alpha$ that minimizes the cost function while meeting the equality constraint is found. Fifth, $\alpha$ is substituted into the hankel matrix equation to obtain a corresponding input-output track, and the predicted input u is extracted from the track. Sixth, the predicted input u is sent to a robotic arm for operation. Seventh, the first n input-output track points of a current moment are fetched for updating the terminal equality constraint as feedback. Eighth, t is updated through t=t+1, and operation 4 is performed again until a system is in the balanced state.

In all embodiments of the present disclosure, a type of the input and a type of the output of the robotic arm may be derived from, or not from, the dynamics model. Examples are illustrated as follows.

1. Using the dynamics model

In all embodiments of the present disclosure, a dynamics equation of the robotic arm may be according to a movement parameter of the first object and a movement parameter of the robotic arm.

Each movement parameter comprises at least a parameter determining kinetic energy or potential energy, and the dynamics equation comprises an underactuated equation and an actuated equation. The underactuated equation governs a part of which an input torque is 0, and the actuated equation art governs another part of which an input torque is not 0.

In all embodiments of the present disclosure, the movement parameter may comprise at least one of: a length of the robotic arm, a dimension of the first object, a mass of the robotic arm, a mass of the first object, a moment of inertia of the robotic arm, and a moment of inertia of the first object.

In all embodiments of the present disclosure, categories of the movement parameters of the first object and categories of the movement parameters of the robotic arm may be the same or different.

In all embodiments of the present disclosure, a state-space representation of the robotic arm may be determined according to the underactuated equation and the third matrix. The state-space representation represents a movement state of the robotic arm. The predicted input of the robotic arm at the current moment is determined according to the state-space representation and the actuated equation.

In all embodiments of the present disclosure, a first state-space representation of the robotic arm may be determined according to the third matrix, and the first state-space representation is then processed according to the underactuated equation to obtain the state-space representation.

In all embodiments of the present disclosure, an input torque may be determined according to the state-space representation and the actuated equation. The input torque is configured for controlling rotation of a joint of the robotic arm. The input torque is determined to serve as the predicted input of the robotic arm at the current moment.

In all embodiments of the present disclosure, an initial dynamics equation of the robotic arm is determined according to the movement parameter of the first object and the movement parameter of the robotic arm. Partial feedback linearization is performed on the initial dynamics equation to obtain the dynamics equation. The partial feedback linearization comprises linear approximation on the initial dynamics equation.

In all embodiments of the present disclosure, the partial feedback linearization comprises initializing a parameter in the initial dynamics equation to be a linear parameter. For example, when $\theta$ approaches 0, a parameter $\sin\theta$ is initialized as a parameter $\theta$.

For example, for a scenario in which the bottle is balanced on a housing of the lower arm of the robotic arm, a process of performing dynamics modeling on the robotic arm obtained through abstraction based on the scenario is described as follows:

First, the robotic arm is placed in a world coordinate system. A direction of an extension line of the lower arm of the robotic arm is defined as a positive direction of a y-axis. A direction perpendicular to the y-axis and parallel to the ground is defined as an x-axis direction. Rightward direction (with respect to an imaginary human whose arm is the robotic arm) is a positive direction of an x-axis. A vertical upward direction opposite to the gravity direction and perpendicular to the ground is a z-axis direction. In this way, spatial rectangular coordinate system is established. For implementing control of a robot for balancing the bottle, a two-dimensional model may be established on a YOZ plane.

A simplified diagram of the two-dimensional model on the YOZ plane is shown in FIG. 5. An upper circle 510 represents a cross section of the bottle, a lower long rectangle 520 represents a side of the lower arm of the robotic arm, and a circle 530 at the end of the long rectangle 520 represents a rotation shaft (for example, an elbow joint of the robotic arm) around which the lower arm can rotates. The first object is assumed to be a homogeneous rigid body, and a position of the bottle is represented by a position of a centroid of the bottle. The bottle is substantially perpendicular to the lower arm when viewed vertically.

Physical quantities (movement parameters) used in the two-dimensional model and positive directions of the physical quantities are defined as follows. A distance between the centroid of the bottle and a rotation axis of the rotation shaft of the robotic arm, along a horizontal direction of the side of the robotic arm, is represented by s. A torque for rotating the rotation shaft of the robotic arm is represented by $\tau$, an anticlockwise direction is a positive direction of the torque, and an angle of rotating the lower arm relative to the world coordinate system is represented by $\theta$. A length of the side of the lower arm is represented by $l_a$, a radius of the bottle is represented by $r_b$, a mass of the lower arm is represented by $m_a$, a mass of the bottle is represented by $m_b$, a moment of inertia of the lower arm is represented by $I_a$, and a moment of inertia of the bottle is represented by $I_b$.

For example, the physical quantities used in the two-dimensional model are defined as follows.

Length of the lower arm: $l_a$=0.27 m

Radius of the bottle: $r_b$=0.0325 m

Mass of the lower arm: $m_a$=2.48 kg

Mass of the bottle: $m_b$=0.24 kg

Moment of inertia of the lower arm: $I_a$=0.03

Moment of inertia of the bottle: $I_b$=2.535e-04

Linear velocity of movement of the bottle may be expressed as follows:

$$v^2 = \dot{s}^2 + (s\dot{\theta})^2$$

Angular velocity of rotation of the bottle may be expressed as follows:

$$\omega = \frac{\dot{s}}{r_b} + \dot{\theta}$$

According to the Euler Lagrange equation, kinetic energy and potential energy of all rigid bodies in the system need to be obtained. A sum of the kinetic energy and the potential energy of all the rigid bodies in the system are expressed as follows:

$$T = \frac{1}{2}I_b \cdot \left(\frac{\dot{s}}{r_b} + \dot{\theta}\right)^2 + \frac{1}{2}m_b(\dot{s}^2 + s^2\dot{\theta}^2) + \frac{1}{2}I_a\dot{\theta}^2$$

A sum of the potential energy of all the rigid bodies in the system is expressed as follows:

$$U = \frac{1}{2}m_a g \cdot l_a sin\theta + m_b gs \cdot sin\theta$$

Paritial derivatives of kinetic energy with respect to states s (where the state s stands for a position s of the bottle on the lower arm) and θ in an extended coordinate (generalized coordinate) system are expressed as follows:

$$\frac{d}{dt}\left(\frac{\partial T}{\partial \dot{s}}\right) = \left(\frac{T_b}{r_b^2} + m_b\right)\ddot{s} + \frac{I_b}{r_b}\ddot{\theta}$$

$$\frac{d}{dt}\left(\frac{\partial T}{\partial \dot{\theta}}\right) = \frac{I_b}{r_b}\ddot{s} + (I_b + I_a + m_b s^2)\ddot{\theta} + 2m_b s\dot{\theta}\dot{\theta}$$

$$\frac{\partial T}{\partial s} = m_b \dot{\theta}^2 s$$

$$\frac{\partial T}{\partial \theta} = 0$$

Paritial derivatives of the potential energy to the states s and θ in the extended coordinate system are as follows.

$$\frac{\partial U}{\partial s} = m_b g sin\theta$$

$$\frac{\partial U}{\partial \theta} = \left(\frac{1}{2}m_a g l_a + m_b g s\right) cos\theta$$

On a basis of calculation through the Euler Lagrange equation, in a system on the plane YOZ, simplification of the dynamics model can be expressed below. The first equation represents a dynamics equation in the degree s of freedom (which refers to the position s of the bottle on the lower arm). In this equation, an actual input torque on a right side is 0 because this degree of freedom is under underactuated. The second equation represents a dynamics equation in a degree θ of freedom (which refers to the rotation angle) of the lower arm, and this degree of freedom is actuated by torque τ. Hence, the right side of this equation is τ.

$$\left(\frac{I_b}{r_b^2} + m_b\right)\ddot{s} + \frac{I_b}{r_b}\ddot{\theta} - m_b s\dot{\theta}^2 + m_b g sin\theta = 0$$

$$\frac{I_b}{r_b}\ddot{s} + (I_b + Ia + m_b s^2)\dot{\theta} + 2m_b s\dot{s}\ddot{\theta} + \left(\frac{1}{2}m_a g l_a + m_b g s\right) cos\theta = \tau$$

Generally, the underactuated part (which corresponds an equation of which the right side is 0) in the dynamics model is introduced into the state-space representation. Hence, dynamics of the system is considered in the state-space representation.

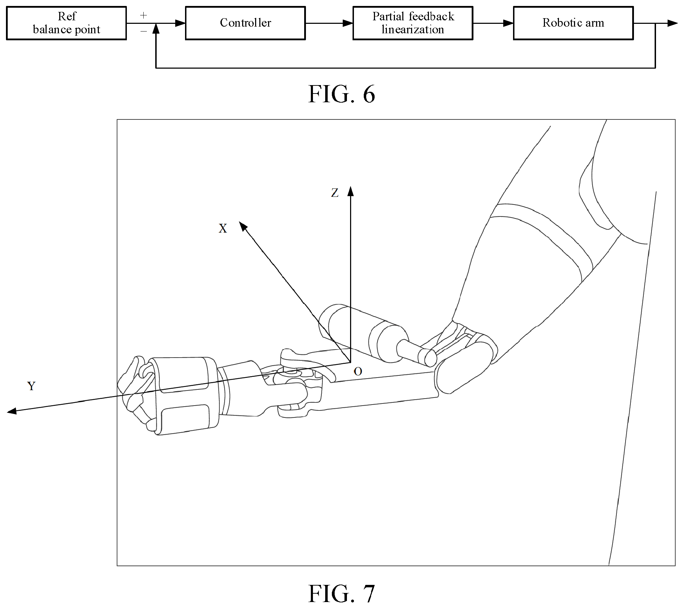

Based on inputs and an outputs of the dynamics model, the input u of the robotic arm may be the rotation angular acceleration $\ddot{\theta}$ of a rotation joint, and the output y may be the angle θ and the angular velocity $\dot{\theta}$ of the rotation joint as well as the position s of the bottle on the arm and a velocity $\dot{s}$ of the bottle. When writing the state-space representation in a matrix form, first three rows are differential relationships between the state variables, and the last row of the state-space representation refers to the underactuated part of the dynamics model. The balance state (i.e., the above-mentioned target balanced state) ref is set as follows. Balance points of all (angular) velocities and (angular) accelerations are 0 (where all parameters have a corresponding unit). A balance point of the rotation angle of the joint is 0 rad (0 rad for a simplified dynamics model, and 0.465 rad for an exemplary real robotic arm). A balance point s of the bottle on the arm is the midpoint of the lower arm (0.135 m for a simplified dynamics model, and 22, which refers to a 22th column of a tactile-sensor array arranged on the robotic arm, for an exemplary real robotic arm). Generally, when a robotic arm motor is controlled by torque, partial feedback linearization is performed on a dynamics system model. Thereby, a linearized system model is obtained, and an expression between torque τ and a new control parameter v, which is introduced via the partial feedback linearization is also obtained. The linearized system model is configured for designing the controller, and the expression is configured for converting the control parameter v, outputted by the controller, into the torque τ. The torque τ is sent to the robotic arm. The entire control procedure is as shown in FIG. 6.

In this embodiment of the present disclosure, $\ddot{\theta}$ is directly used as the new control parameter v, and partial feedback linearization is as follows. First, when θ approximates 0 and is subject to a small change, sinθ is linearized as θ for approximation. Second, when θ approximates 0 and is subject to a small change, $\dot{\theta}^2$ is linearized as equal to 0.

After the partial feedback linearization is performed, a dynamics underactuated equation is introduced into the state-space representation. The state-space representation is expressed as follows:

$$\begin{bmatrix}\dot{\theta}\\\ddot{\theta}\\\dot{s}\\\ddot{s}\end{bmatrix} = \begin{bmatrix} 0 & 1 & 0 & 0\\ 0 & 0 & 0 & 0\\ 0 & 0 & 0 & 1\\ -\dfrac{m_b g}{\left(\dfrac{l_b}{r_b^2} + m_b\right)} & 0 & 0 & 0 \end{bmatrix}\begin{bmatrix}\theta\\\dot{\theta}\\s\\\dot{s}\end{bmatrix} + \begin{bmatrix} 0\\ 1\\ 0\\ -\dfrac{\dfrac{l_b}{r_b}}{\left(\dfrac{l_b}{r_b^2} + m_b\right)} \end{bmatrix}\ddot{\theta}$$

The dynamics actuated equation represents a relationship between the torque τ and the new control parameter v (herein $\ddot{\theta}$) that is introduced through partial feedback linearization.

$$\frac{I_b}{r_b}\ddot{s} + (I_b + Ia + m_b s^2)\dot{\theta} + 2m_b s\dot{s}\ddot{\theta} + \left(\frac{1}{2}m_a g l_a + m_b g s\right)\cos\theta = \tau$$

Here the input and the output of the robotic arm are determined through the dynamics model. In this case, the input of the robotic arm is the rotation angular acceleration $\ddot{\theta}$ of the rotation joint, and the output is the angle $\theta$ and the angular velocity $\ddot{\theta}$ of the rotation joint as well as the position s of the bottle on the arm and the velocity $\dot{s}$ of the bottle.

$g$ in the foregoing equation represents gravity acceleration.

In all embodiments of the present disclosure, when the dynamics model is used, a rotation angular velocity of a joint of the robotic arm may be calculated according to the unit impulse response and the third matrix. The rotation angular velocity is determined to serve as the predicted input of the robotic arm at the current moment t.

2. Not using dynamics model

When the input and the output of the system are selected for a case not using the dynamics model, the input may be a rotation angle $\theta$ of the rotation joint, and the output is an integral $\int s\,dt$ for a position error of the first object on the arm with respect to time as well as the position s and a velocity $\dot{s}$ of the first object on the arm. The balance state (the target balanced state) ref is set as follows. Balance points of all (angular) velocities and (angular) accelerations are 0 (where all parameters have a corresponding unit). A balance point of the rotation angle of the joint is 0 rad (0 rad for a simplified dynamics model, and 0.465 rad for an exemplary real robotic arm). A balance point s of the bottle on the arm is the midpoint of the lower arm (0.135 m for a simplified dynamics model, and 22, which refers to a 22th column of a tactile-sensor array arranged on the robotic arm, for an exemplary real robotic arm). The physical relationship between the inputs and the outputs may refer to the description in the case using the dynamics model, and the computation can be performed accordingly.

$\theta$ represents an angle that is in a pitch direction, i.e., an angle by which the lower arm of the robotic arm rotates about a y-axis. $\dot{\theta}$ represents an angular velocity that is in the pitch direction. $\tau$ represents a control torque in the pitch direction applied for rotation of the lower arm of the robotic arm about the y-axis. s represents an offset, in a y direction, between a centroid of the first object and a center of gravity of the lower arm of the robotic arm. $\dot{s}$ represents an offset velocity, in the y direction, between the centroid of the bottle and the center of gravity of the lower arm of the robotic arm.

In some cases, the acceleration signal $\ddot{\theta}$ may not be accurately collected and sent to the robotic arm due to restrictions of hardware conditions. Therefore, the input and the output of the system are selected not depending on the dynamics model.

In all embodiments of the present disclosure, the respective previous input-output pairs of multiple consecutive previous moments before the current moment may be obtained for the current moment t. The N respective previous input-output pairs of N different previous moments are uniformly sampled from the previous input-output pairs of the multiple consecutive previous moments.

As an example, the previous input-output pairs (including previous inputs and previous outputs) whose length is N=1000 is collected. The formed hankel matrices are excessively large due to the large N, and consequently, a computing burden and computing time of a computer device are significantly increased. Therefore, sampling is performed according to an interval, one is taken each time four points are discarded from the inputs/outputs, previous data of the system with a length of 1000 is thus compressed to a length of 200, and then the compressed data is input to the DD MPC controller. This can effectively reduce the computing burden and the computing time of the computer device. In addition, a length of prediction horizon may beset to 50. All penalty weights involved in the DD MPC are then adjusted.

Afterwards, the first object is placed on the lower arm of the robotic arm. When the first object is subject to interference, the rotation angle $\theta$ of the rotation joint is output through the DD MPC to control the robotic arm to balance the first object on the robotic arm.

Hereafter an embodiment of how to obtain the previous outputs of the N moments is illustrated.

In practice, the pose of the first object may be identified though a visual perception method. In this method, a linear error ranging from 1 to 2 centimeters and an angle error of 5 to 10 degrees may occur, and operation time is as long as about 100 ms, namely, the operation frequency is about10 Hz.

In all embodiments of the present disclosure, an engineered visual solution may be used. To be specific, a lightweight data image processing means is used to determine a position of the centroid of the first object in an x direction. Various specific implementations may be utilized, which is not limited in the present disclosure. For example, the first object is a bottle. Cluster analysis is performed based on different colors of the bottle and objects in a surrounding environment to obtain a geometric center of the bottle. Then, through model calibration, the geometric center and the centroid position of the first object can be obtained. As another example, the first object is a bottle. Feature identification is performed on the bottle to determine a position of the bottle in an image and determine a geometric center of the bottle. Then, through model calibration, the geometric center and the centroid position of the first object can be obtained. In this method, lightweight computing leads to fast computing. Basically, each operation only needs about 10 ms, that is, the operation frequence is nearly 100 Hz. A linear error is also controllable, usually about 1 cm, and an angle error is about 5 degrees. A disadvantage of the method is that there is a large error in a depth direction of a camera, that is, a y direction of a world coordinate system of the bottle. Features (for example, the x direction and the y direction) of the coordinate system in this example may refer to the coordinate system described in the foregoing embodiment concerning the dynamics model. Details are not described again in the present disclosure.

The above disadvantage corresponds to an advantage of the tactile sensor. The tactile sensor cannot obtain a very accurate result for the position in the x direction, and it can only obtain an absolute position of a contact point between the first object and the robotic arm relative to the robotic arm. By comparison, position measurement made by the tactile sensor on the contact point between the first object and the robotic arm in the y direction of the robotic arm is very accurate. Therefore, the state of the first object may be estimated by combining the advantages of the visual manner and the tactile manner.

In all embodiments of the present disclosure, a visual and tactile fusion solution may be used. For example, the tactile sensor provides the position of the bottle in the y direction and the pitch angle (the rotation angle at the joint) of the robotic arm. The lightweight visual data image processing is performed for comparison with prior image data to determine the centroid position of the bottle in the x direction. Budget time per operation of this solution is about 10 milliseconds, that is, the operation frequency is about 100 Hz, while the linear error is about 1 cm and an angle error is about 5 degrees. This is similar to the foregoing engineered visual solution, but a disadvantage of the inaccurate measurement of the centroid of the first object in the y direction in the engineered visual solution is overcome.

For example, as shown in FIG. 7, in the engineered visual solution, an accurate pose of a first object 710 in the x direction can be obtained, and in the visual and tactile fusion solution, an accurate pose of the first object 710 in the y direction may be obtained. Through combination, an accurate centroid position of the first object 710 may be can be obtained. Table 1 shows the periods needed and corresponding errors of the foregoing three solutions.

Table 1: Three solutions for determining the pose of the first object

| Solutions | Method descriptions | Period | Linear error | Angle error |
|---|---|---|---|---|
| Visual perception solution | Recognition of a 6-dimensional pose by using a system method | 100 ms | 1-2 cm | 5-10° |
| Engineered visual solution | Lightweight visual data image processing to determine the centroid position of the bottle in the x direction | 10 ms | 1 cm | 5° |
| Visual-tactile fusion solution | The position of the bottle in the y direction and the pitch pose are provided according to tactility, and visual color photo matting is performed for comparison with prior photo data to determine the centroid position of the bottle in the y direction. | 10 ms | 1 cm | 5° |

In an embodiment, the visual-tactile fusion solution is used. As an example, obtaining the N respective previous input-output pairs of N different previous moments comprises at least one of the following operations 1 to 7:

Operation 1: obtain, for a $j^{th}$ moment in the N moments, the previous input of the $j^{th}$ moment, j being a positive integer less than or equal to N.

Operation 2: determine a pose of the robotic arm, which is after the robotic arm moves according to the previous input of the $j^{th}$ moment.

Operation 3: obtain a first position of the first object on the robotic arm via a tactile sensor.

Operation 4: obtain an image of the first object at the $j^{th}$ moment.

Operation 5: obtain a second position of the first object on the robotic arm according to the image of the first object.

Operation 6: determine a position of a centroid of the first object based according to the first position and the second position.

Operation 7: determine the previous output of the robotic arm of the j<sup>th</sup> moment according to the centroid position of the first object and the pose of the robotic arm.

In all embodiments of the present disclosure, the first position and the second position each may be in the form of coordinates (x, y), where coordinates corresponding to the first position are (x1, y1), and coordinates corresponding to the second position are (x2, y2).

As illustrate above, the first position is accurate in the y direction, and the second position is accurate in the x direction. Therefore, the centroid position of the first object may be determined as (x2, y1).

The method of obtaining the second position of the first object on the robotic arm according to the image of the first object in operation 5 is not limited in the present disclosure. For example, a feature identification method may be used to determine the position of the first object in the image of the first object and thereby determine a geometric center of the first object, and the second position is a position of the geometric center of the first object.

In all embodiments of the present disclosure, categories of data in the previous output may be determined according to whether the dynamics model is used. For example, if the dynamics model is used, the previous output comprises the centroid position of the first object, the velocity of the first object, the angle of the rotation joint of the robotic arm, the angular velocity of the rotation joint of the robotic arm, and the angular acceleration of the rotation joint of the robotic arm. If the dynamics model is not used, the previous output comprises the centroid position of the first object, the velocity of the first object, and an integral of the centroid position of the first object and an error with respect to time.

According to the foregoing method, an accurate position of the first object on the robotic arm can be obtained, which provides strong support for the task of balancing the first object on the robotic arm.

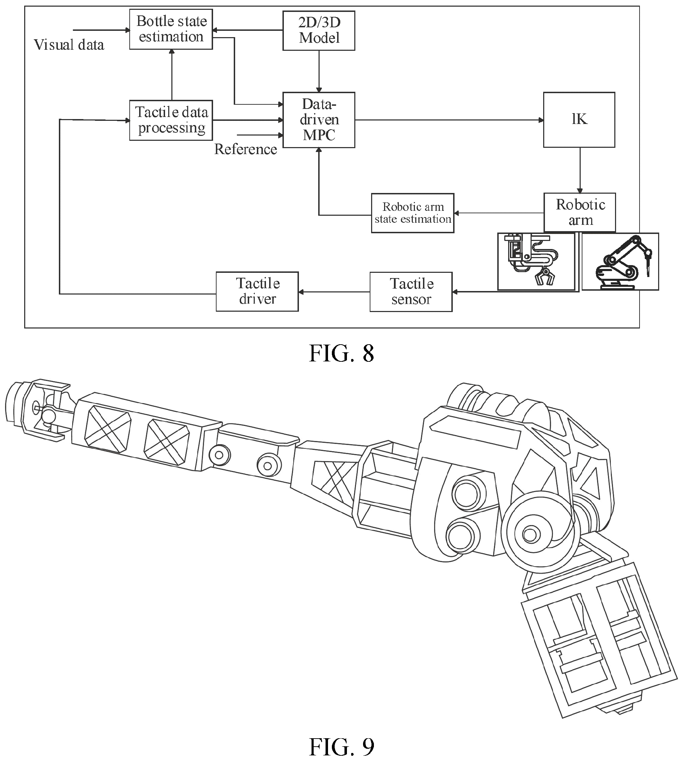

An overall control architecture implementing the foregoing functions may be as shown in FIG. 8. A final objective is to control the balance of the first object on the robotic arm by inputting an instruction for a joint motor of the robotic arm. A joint encoder is mounted on each joint motor of the robotic arm, so that a rotation angle, an angular velocity, and current information of the joint motor can be fed back. The information may be configured for estimating the state of the robotic arm. In addition, tactile sensors are further mounted on fingers, a palm, and some links of the robotic arm. A positional pose of the bottle and a two-dimensional or three-dimensional system dynamics model for the first object and the lower arm are obtained based on tactile perception information through state estimation. The system dynamics model may be two-dimensional or three-dimensional. The input and the output of the robotic arm may be determined by using the system dynamics model. In this case, data that needs to be collected by the data driven MPC controller may be collected according to the input and the output, of the robotic arm, depending on the dynamics model. The data driven MPC controller is designed according to the collected previous input-output pairs. The first object is placed on the lower arm of the robotic arm. When the first object is subject to interference, the data driven MPC outputs corresponding predicted input to complete the task of balancing the first object on the robotic arm. The predicted input may be a variable in joint space or a variable in Cartesian space based on different robotic arms. If the predicted input is a variable in Cartesian space, a joint angle of each joint needs to be calculated based on inverse kinematics. As time goes by, the controller outputs a pose of an end effector of the robotic arm or a sequence of poses of link centroid(s). Therefore, corresponding to a series of inverse kinematics solutions, a sequence of joint angles and joint angular velocities of the robotic arm can be obtained. The sequence of the joint angles and the joint angular velocities is sent to the robotic arm, so that control on the pose of the end effector of the robotic arm or control on a centroid position and a centroid pose of a link can be implemented. If the predicted input is a variable in the joint space, for example, a joint angle, an angular velocity, or an angular acceleration, the predicted input may be directly sent to the robot to complete the task of balancing the first object on the robotic arm.

A real experiment was performed using a bottle as the first object. In the real experiment, the bottle can roll back and forth on the lower arm of the robotic arm, and a movement state of the bottle changes as an absolute pose of the lower arm of the robotic arm with respect to the ground changes. The bottle may roll on the lower arm by controlling the joint motor of the robotic arm. In the whole process of the experiment, the bottle can be balanced and does not fall to the ground when the lower arm of the robotic arm move under control. The real experiment proves the effectiveness and stability of the control architecture and the controller in this embodiment of the present disclosure.

Embodiments of the present disclosure further provide related information of hardware of the robotic arm. All the foregoing methods for controlling the robotic arms may be implemented on the robotic arm.

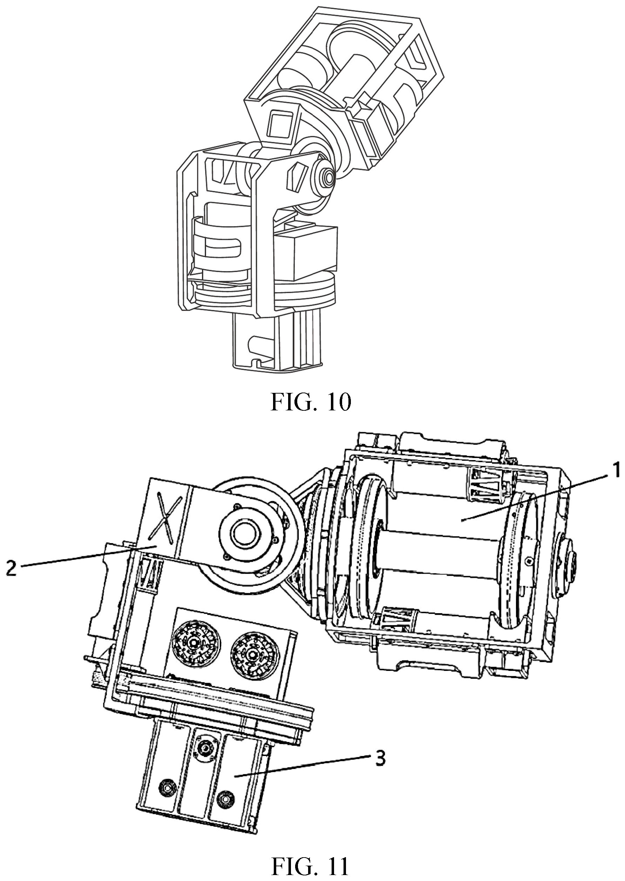

FIG. 9 shows a human-like 7-degree-of-freedom robotic arm. An elbow control motor and a wrist control motor are disposed behind a hollow part of a third joint of a shoulder, an elbow rope drive and a wrist rope drive are driven by a motor at a part 3 of the shoulder to a rope wheel, and the rope wheel performs corresponding movement control on a wrist and an elbow by using a belt drive rope. A 3-degree-of-freedom shoulder joint structure is shown in FIG. 10. A quantity of joints whose movement can be independently implemented by a robot mechanism is referred to as a movement degree of freedom of the robot mechanism, which is represented by a DOF for short. Currently, a control method used in an industrial robot is to use each joint on a robotic arm as an independent servo mechanism, that is, each shaft corresponds to one server, and each server is controlled through a bus, and is uniformly controlled by a controller and coordinately operates.

In a low-inertia differential shoulder joint structure used in a 7-degree-of-freedom robotic arm, a differential rope drive mechanism is used at the shoulder. This not only reduces the weight of the mechanism and disposes a motor module behind, but also implements torque superposition in some cases. A third degree of freedom of the shoulder joint uses a pair of large and small wire wheels, and transmission is performed in a rope driving manner. This further improves transmission precision and reduces weight. Finally, drive modules of the wrist joint and the elbow joint are placed behind a shoulder joint upper arm module, so that the weight of the entire robotic arm is extremely reduced. The foregoing structure is easy to implement via modules and simplifies a manufacturing procedure.

FIG. 11 is an overall view of a shoulder joint. It can be seen that the shoulder joint is mainly divided into three modules: a differential mechanism module 1, a crossed roller bearing rotation module 2, and an upper arm end drive module 3. The crossed roller bearing module 2 is an intermediate module connecting the differential mechanism 1 and the upper arm end drive module 3. The three modules are described in detail below.

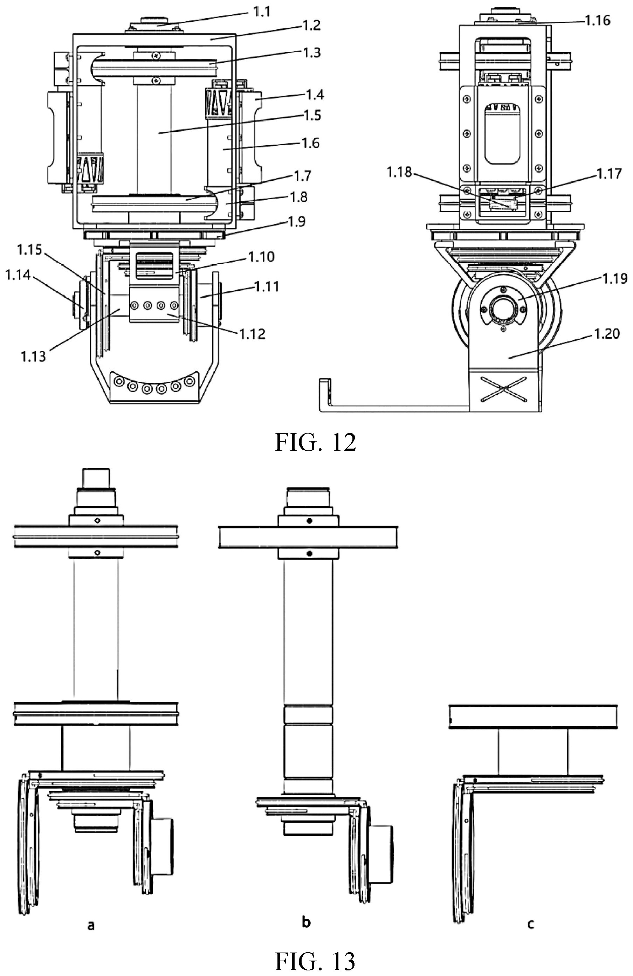

FIG. 12 is a front view and a side view of a differential mechanism. Main parts are marked one by one in FIG. 12, and parts in complex shapes and connection manners are introduced one by one below. It can be learned from FIG. 12 that, the entire differential mechanism includes a rotary encoder 1.1, a differential mechanism fixing base 1.2, a large wire wheel 1.3, a motor protective cover 1.4, a differential mechanism inner ring shaft 1.5, a motor 1.6, a differential mechanism outer ring shaft 1.7, a motor base 1.8, a cross roll bearing outer ring end cap 1.9, a cross roll inner ring fixing base 1.10, a differential mechanism small wire wheel 1.11, a connection block 1.12, a connection shaft 1.13, a rotary encoder 1.14, a differential mechanism large wire wheel 1.15, a bearing end cap 1.16, a small wire wheel 1.17, a steel rope 1.18, a bearing end cap 1.19, and an upper arm connecting seat 1.20. The following describes a specific composition and operating principle of the entire differential mechanism. An operating principle of the entire differential mechanism is similar to that of three bevel gears. The operating principle of the differential mechanism is shown in FIG. 13. It can be seen that FIG. 13a shows a main body of the entire differential mechanism, including the large wire wheel 1.3, the differential mechanism inner ring shaft 1.5, the differential mechanism outer ring shaft 1.7, the differential mechanism small wire wheel 1.11, the differential mechanism large wire wheel 1.15, and the steel wire wound on the differential mechanism. The differential mechanism small wire wheel 1.11 and the differential mechanism large wire wheel 1.15 are fastened to the upper arm connecting seat 1.20 by using screws. Cooperation between the differential mechanism inner ring shaft 1.5 and the differential mechanism small wire wheel 1.11 of the differential mechanism is shown in FIG. 13b, and cooperation between a gear pair of the differential mechanism is implemented. Driving is performed by using the large wire wheel 1.3 that is connected to the differential mechanism inner ring shaft 1.5 by using a screw and the small wire wheel 1.17 matching the large wire wheel 1.3. FIG. 3c shows another gear pair including the differential mechanism outer ring shaft 1.7 and the differential mechanism large wire wheel 1.15. It can be seen that the differential mechanism large wire wheel 1.5 and the differential mechanism outer ring shaft 1.7 are connected in the form of socket shaft. A specific structure is described below. A transmission shaft 1.21 in FIG. 13a is connected to a connection block 1.12 and is responsible for transmitting rotation of the entire differential mechanism to the rotary encoder 1.1.

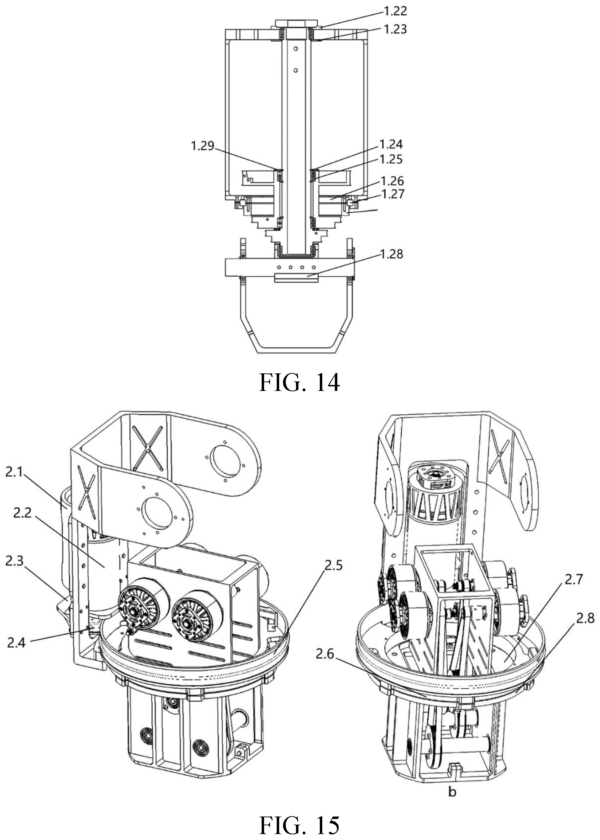

FIG. 14 shows a sectional view of the differential mechanism. Because the differential mechanism small wire wheel 1.11 and the differential mechanism large wire wheel 1.15 are connected to the upper arm connecting seat 1.20 by using screws, a connection manner is not described in FIG. 14. It can be seen that in FIG. 14, an outer ring of the rotary encoder 1.1 is fastened to a connecting pressure plate 1.22 by using a nut, and an inner ring of the rotary encoder 1.1 is clamped by the nut and a shaft shoulder of the transmission shaft 1.21, so that the inner ring rotates together with the transmission shaft 1.21, and a pressing plate 1.23 rotates together with the connecting pressure plate 1.22 to press against an outer ring of a deep groove ball bearing 1.25 (all bearings in FIG. 14 are deep ball bearings, and are denoted by only one numeral). A connection between the differential mechanism inner ring shaft 1.5 and the differential mechanism outer ring shaft 1.7 is similar to the foregoing connection. There are two deep groove ball bearings 1.25 at upper and lower ends of the differential mechanism outer ring shaft 1.7. A bearing inner ring is fastened by using the shaft shoulder and a snap spring 1.24 of the differential mechanism inner ring shaft 1.5. An outer ring is fastened by using the shaft shoulder and a bearing pressing plate 1.29 of the differential mechanism outer ring shaft 1.7. The connection between the differential mechanism inner ring shaft 1.5 and the cross roll inner ring fixing base 1.10 and the connection block 1.12 slightly differs from the foregoing connection, and pressing is implemented through inner and outer rings of the bearing. Details are not described again. The connection shaft 1.13 and the c connection block 1.12 are fixed and limited by using a key 1.28 and a screw. In FIG. 14, the cross roll bearing 1.27 is fastened by the cross roll inner ring fixing base 1.10 and the cross roll bearing inner ring cover plate 1.26, and the outer ring is fastened by the differential mechanism fixing seat 1.2 and the cross roll bearing outer ring end cap 1.9. The connection between the upper arm connecting seat 1.20 and the connection shaft 1.13 also uses a deep groove ball bearing and is fixed by pressing inner and outer rings of the deep groove ball bearing.

FIG. 15 is a view of an arm drive module. Because the structure of this part is complex, the arm drive module is described in two parts. One part is a shoulder size wire drive module. One part is a wrist joint motor drive module and an elbow joint motor drive module. The shoulder size wire drive module mainly includes a motor protection housing 2.1, a motor 2.2, a motor fastening seat 2.3, a small wire wheel 2.4, a large wire wheel 2.5, a cross roll bearing outer ring fixed upper cover plate 2.6, a cross roll bearing inner ring fixed lower cover plate 2.7, and a cross roll bearing outer ring fixed lower cover plate 2.8. In fact, the structure of this module does not greatly differ from the structure of the foregoing differential mechanism. The large wire wheel 2.5 and the small wire wheel 2.4 are arranged tangent to each other. The small wire wheel 2.4 is connected to the motor 2.2 to form a driving source. Motor 2.2 is fixed on the upper arm connecting seat 1.20. The rotation module also consists of a cross roll bearing 2.22. A lower end of the large wire wheel 2.5 and a cross roll bearing inner ring fixed lower cover plate 2.7 clamps the cross roll bearing inner ring. The cross roll bearing outer ring fixed upper cover plate 2.6 and the cross roll bearing outer ring fixed lower cover plate 2.8 clamps an outer ring of the cross roller bearing. In addition, the cross roll bearing outer ring fixed upper cover plate 2.6 and the upper arm connecting seat 1.20 are fixed by using a thread. The entire rotation mechanism is completed. The wrist joint motor drive module and the wrist joint motor drive module are seen below.

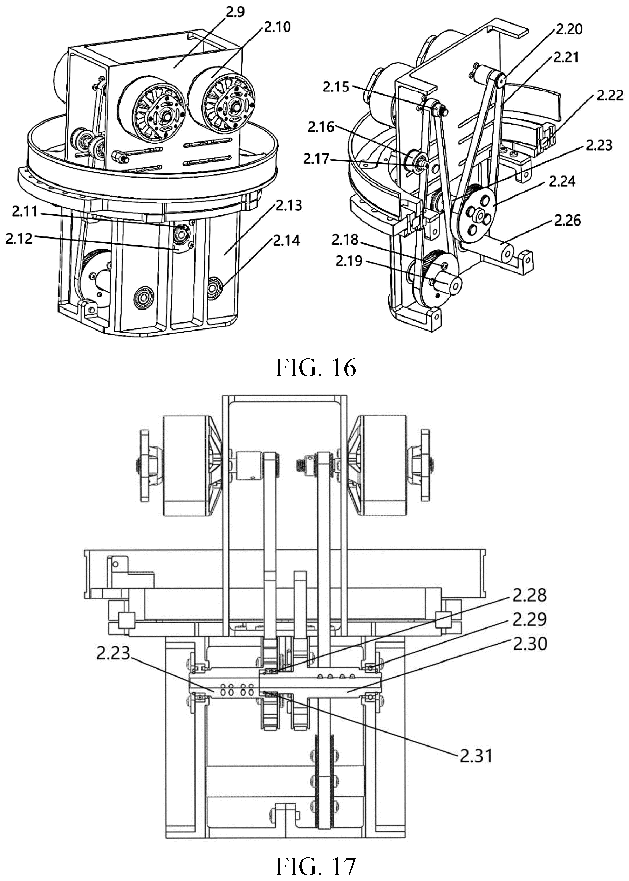

FIG. 16 shows a wrist joint motor drive module and an elbow joint motor drive module. This part is a symmetrical structure, and hereinafter only a half is described. This module mainly includes a driving motor fixing seat 2.9, a drive motor 2.10, a snap spring 2.11, a bearing end cap 2.12, a pulley fixing seat 2.13, a deep groove ball bearing 2.14, a small wire wheel 1 2.15, a pulley bearing 2.16, a stud 2.17, a screw 2.18, a synchronous pulley 1 2.19, a small wire wheel 2 2.20, a synchronous belt 2.21, a cross roll bearing 2.22, an intermediate shaft 1 2.23, a wheel cover plate 2.24, a lock nut 2.25, a synchronous pulley 2 2.26, and a shoulder bearing 2.27. It can be seen that both the motor fixing seat 2.9 and the pulley shaft fixing seat 2.13 are connected to the cross roll bearing inner ring fixed lower cover plate 2.7 in FIG. 5 and rotate together with the large wire wheel 2.5. The drive motor 2.10 is fastened to the motor fixing seat 2.9 by using a screw. The drive motor 2.10 is connected to a small pulley 1 2.15 and a small pulley 2 2.20, and then movement is transmitted to the lower wire wheel shaft by using the synchronous belt 2.21, and the synchronous belt 2.21 is tightened by using the pulley bearing 2.16 and the stud 2.17. A connection manner of the synchronous pulley 1 2.19 and the synchronous pulley 2 2.26 is the same as that of the pulley fixing seat 2.13. The two synchronous belt axes are fixed by using two shoulder bearings 2.27 and a shoulder of the pulley fixing seat 2.13. The synchronous belt wheel is integrated with the shaft. To prevent the synchronous belt 2.21 from dragging out, wheel cover plates 2.24 are added to two sides of each synchronous pulley, and the synchronous belt wheel cover plate 2.24 is fixed to two sides of the wheel by using the lock nuts 2.25 and the screws 2.18. The connection manner of the intermediate shaft is a structure of a socket and is separately described below.

It can be seen from FIG. 17 that the connection between the intermediate shaft 1 2.23 and the intermediate shaft 2 2.30 is performed by using two deep groove ball bearing 2.28. In this way, relative rotation of the two axes can be implemented. An inner ring of the bearing is deadlocked by using a snap spring 2.31 and a shoulder of the intermediate shaft 2 2.30, and an outer ring is deadlocked by using a collar of the intermediate shaft 1 2.23 and a wheel cover plate 2.24. The outer sides of the two axes are both connected to the deep groove ball bearing 2.29, an inner ring of the bearing is deadly locked by using a shoulder and a snap spring, and an outer ring is deadly locked by using a pulley fixing seat 2.13 and a bearing end cap 2.12. The entire structure is compact and has high transmission precision.

The following is an apparatus embodiment of the present disclosure, which can be configured for executing the method embodiments of the present disclosure. Details not disclosed in the apparatus embodiments may refer to the method embodiments of the present disclosure.

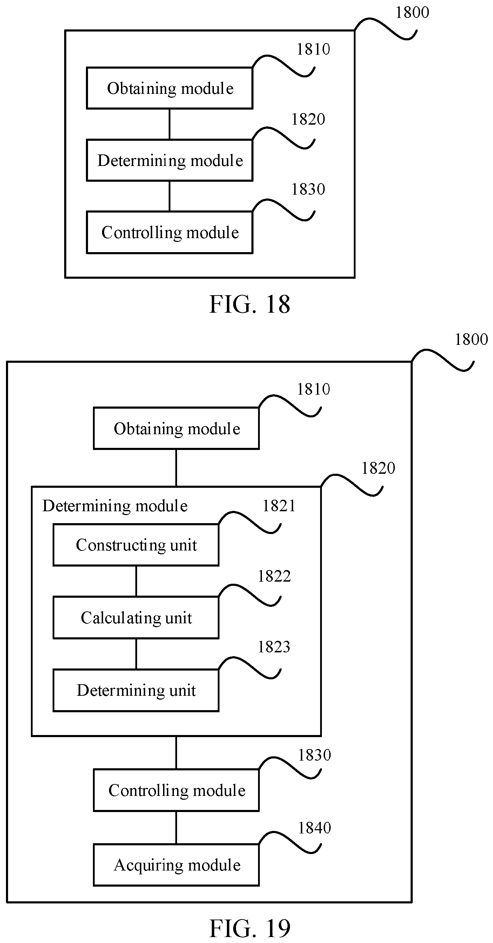

FIG. 18 is a block diagram of an apparatus for controlling a robotic arm according to an embodiment of the present disclosure. The apparatus is configured for implementing the foregoing method for controlling the robotic arm. The function may be implemented by hardware or may be implemented by hardware executing corresponding software. The apparatus may be the robotic arm described above or may be arranged on the robotic arm. The apparatus 1800 may include an obtaining module 1810, a determining module 1820, and a controlling module 1830.

The obtaining module 1810 is configured for obtaining N respective previous input-output pairs of N different previous moments, where each of the previous input-output pairs comprises a previous input and a previous output, the previous input is configured for controlling movement of a robotic arm, so as to keep a first object to be balanced on the robotic arm, the previous output represents a first pose of the robotic arm and a second pose the first object after the movement of the robotic arm, and N is a positive integer.

The determining module 1820 is configured for determining a predicted input for controlling the robotic arm according to the N previous input-output pairs.

The controlling module 1830 is configured controlling, using the predicted input, the movement of the robotic arm in a preset time period after the current moment, so as to keep the first object balanced during the movement of the robotic arm in the time period.

In all embodiments of the present disclosure, as shown in FIG. 19, the determining module 1820 may comprise a constructing unit 1821, a calculating unit 1822, and a determining unit 1823.

The constructing unit 1821 is configured for determining a constraint function and a cost function for the robotic arm according to the N previous input-output pairs, where the constraint function represents a constraint on data, the cost function represents a difference between predicted data and balance data, the balance data comprises an input to the robotic arm and at an output presenting a pose of the robotic arm and a pose of the first object when the robotic arm and the first object arm are in a target balanced state, the predicted data comprises the predicted input and a predict output representing a predicted pose of the robotic arm and a predicted pose of the first object, and the predicted output is predicted according to the previous outputs.

The calculating unit 1822 is configured for calculating a unit impulse response of the robotic arm through the constraint function and the cost function, where a reaction of the robotic arm to the predicted input depends on the predicted input and the unit impulse response.

The determining unit 1823 is configured for determining the predicted input of the robotic arm at the current moment according to the unit impulse response.

In all embodiments of the present disclosure, the construction unit 1821 may be configured for: determining a first matrix and a second matrix, where the first matrix comprises the previous inputs in the N previous input-output pairs, and the second matrix comprises the previous outputs in the N previous input-output pairs; determining the constraint function of the robotic arm according to top n rows in the first matrix and top n rows in the second matrix, where n is a system order of the robotic arm and is a positive integer; and determining the cost function of the robotic arm according to bottom L rows in the first matrix and bottom L rows in the second matrix, where L represents a length of prediction horizon of the robotic arm and is a positive integer; where for each n+L sequential moments, data pairs of inputs and outputs at n moments are configured for predicting data pairs of inputs and outputs at latter L moments.

In all embodiments of the present disclosure, the construction unit 1821 may be configured for: determining previous inputs from an $(i-1)^{th}$ moment to an $(N-L-n+i-1)^{th}$ moment in the N moments to serve as elements, respectively, in an ith row of the first matrix; and determining previous outputs from an $(i-1)^{th}$ moment to an $(N-L-n+i-1)^{th}$ moment in the N moments to serve as elements, respectively, in an ith row of the second matrix; where i is a positive integer.

In all embodiments of the present disclosure, the constraint function may comprise a first constraint function, a second constraint function, a third constraint function, and a fourth constraint function, and the constructing unit 1821 is configured for: constructing the first constraint function using a slack variable, where the slack variable represents measurement noise, and the first constraint function is configured for limiting interference of the measurement noise on the predicted input; constructing the second constraint function using the top n rows in the first matrix and the top n rows in the second matrix, where the second constraint function is configured for limiting the previous input-output pairs at n moments in the N moments; constructing the third constraint function using the top n rows in the first matrix, the top n rows in the second matrix, and the balance data, where the third constraint function is configured to limit that the robotic arm approximates the target balanced state gradually over time; and constructing the fourth constraint function using the slack variable, a first threshold, and the unit impulse response, where the first threshold is an upper limit of the slack variable, and the fourth constraint function is configured for limiting that the predicted input converges.

In all embodiments of the present disclosure, the constructing unit 1821 may be configured for: determining a function of a first norm using the bottom L rows in the first matrix and the bottom L rows in the second matrix, where the first norm comprises a square Euclidean norm of the previous inputs at latter L moments in the N moments and a square Euclidean norm of the previous outputs at the latter L moments in the N moments; determining a function of a first penalty according to a first penalty weight, a first threshold, and a first regularization term, where the first regularization term represents a regularization penalty due to the unit impulse response, the first penalty weight is a weight for the first regularization term, the first threshold is an upper limit of a slack variable, and the slack variable represents measurement noise; determining a function of a second penalty according to a second penalty weight and a second regularization term, where the second regularization term represents a regularization penalty due to the slack variable, and the second penalty weight is a weight for the second regularization term; and determining the cost function according to the function of the first norm, the function of the first penalty, and the function of the second penalty.

In all embodiments of the present disclosure, the determining unit 1823 may be configured for: determining a third matrix according to the N previous input-output pairs, where the third matrix comprises a first matrix and a second matrix, the first matrix comprises the previous inputs in the N previous input-output pairs, and the second matrix comprises the previous outputs in the N previous input-output pairs; and calculating the predicted input of the robotic arm at the current moment according to the unit impulse response and the third matrix.

In all embodiments of the present disclosure, the determining unit 1823 is configured for: determining a dynamics equation of the robotic arm according to a movement parameter of the first object and a movement parameter of the robotic arm, where each movement parameter comprises at least a parameter determining kinetic energy or potential energy, the dynamics equation comprises an underactuated equation and an actuated equation, the underactuated equation governs a part of which an input torque is 0, and the actuated equation art governs another part of which an input torque is not 0; determining a state-space representation of the robotic arm according to the underactuated equation and the third matrix, where the state-space representation represents a movement state of the robotic arm; and calculating the predicted input of the robotic arm at the current moment according to the state-space representation and the actuated equation; where the movement parameter comprises at least one of: a length of the robotic arm, a dimension of the first object, a mass of the robotic arm, a mass of the first object, a moment of inertia of the robotic arm, and a moment of inertia of the first object.

In all embodiments of the present disclosure, the determining unit 1823 may be configured for: calculating an input torque according to the state-space representation and the actuated equation, where the input torque is configured for controlling rotation of a joint of the robotic arm; and determining the input torque to serve as the predicted input of the robotic arm at the current moment.

In all embodiments of the present disclosure, the determining unit 1823 is configured for: determining an initial dynamics equation of the robotic arm according to the movement parameter of the first object and the movement parameter of the robotic arm; and performing partial feedback linearization on the initial dynamics equation to obtain the dynamics equation, where the partial feedback linearization comprises linear approximation on the initial dynamics equation.

In all embodiments of the present disclosure, the determining unit 1823 is configured to: calculating a rotation angular velocity of a joint of the robotic arm according to the unit impulse response and the third matrix; and determining the rotation angular velocity to serve as the predicted input of the robotic arm at the current moment.

In all embodiments of the present disclosure, as shown in FIG. 19, the apparatus 1800 further includes an acquiring module 1840.

The acquiring module 1840 is configured for: obtaining respective previous input-output pairs of consecutive previous moments before the current moment; and sampling the N previous input-output pairs uniformly from the previous input-output pairs of the consecutive previous moments.

In all embodiments of the present disclosure, the obtaining module 1810 is configured for: obtaining, for a $j^{th}$ moment in the N moments, the previous input of the $j^{th}$ moment, j being a positive integer less than or equal to N; determining a pose of the robotic arm, which is after the robotic arm moves according to the previous input of the $j^{th}$ moment; obtaining a first position of the first object on the robotic arm via a tactile sensor; obtaining an image of the first object at the $j^{th}$ moment; obtaining a second position of the first object on the robotic arm according to the image of the first object; determining a position of a centroid of the first object based according to the first position and the second position; and determining the previous output of the robotic arm of the $j^{th}$ moment according to the centroid position of the first object and the pose of the robotic arm.

Herein previous input-output pairs of multiple moments are obtained, the predicted input of the robotic arm is predicted accordingly, and the movement of the robotic arm is controlled using the predicted input to balance the first object on the robotic arm. Thus, the future system state of the robotic arm is predicted according to previous data, and the control does not depend only on the variables fed back by the robotic arm system. A response to a control command is faster.

When the apparatus provided in the foregoing embodiments implements functions of the apparatus, the division of the foregoing functional modules is merely an example for description. In the practical application, the functions may be assigned to and completed by different functional modules according to the requirements, that is, the internal structure of the device is divided into different functional modules, to implement all or some of the functions described above. In addition, the apparatus and method embodiments provided in the foregoing embodiments belong to the same concept. For the specific implementation process, refer to the method embodiments, and details are not described herein again.

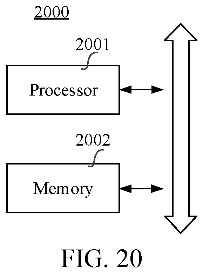

FIG. 20 is a structural block diagram of a robotic arm according to an exemplary embodiment of the present disclosure. The robotic arm 2000 may be the robotic arm described above.

Generally, the robotic arm 2000 includes a processor 2001 and a memory 2002.

The processor 2001 may include one or more processing cores, for example, a 4-core processor or a 20-core processor. The processor 2001 may be implemented by using at least one hardware form of a digital signal processor (DSP), a field programmable gate array (FPGA), and a programmable logic array (PLA). The processor 2001 may alternatively include a main processor and a coprocessor. The main processor is configured to process data in an awake state, also referred to as a central processing unit (CPU). The coprocessor is a low-power processor configured to process data in a standby state. In all embodiments of the present disclosure, the processor 2001 may be integrated with a graphics processing unit (GPU). The GPU is configured to render and draw content that needs to be displayed on a display screen. In all embodiments of the present disclosure, the processor 2001 may further include an artificial intelligence (AI) processor. The AI processor is configured to process computing operations related to machine learning.

The memory 2002 may include one or more computer-readable storage media. The computer-readable storage medium may be tangible and non-transient. The memory 2002 may further include a high-speed random-access memory (RAM), and a non-volatile memory such as one or more magnetic disk storage devices or flash storage devices. In all embodiments of the present disclosure, a non-transient computer-readable storage medium in the memory 2002 stores a computer program, and the computer program is loaded and executed by the processor 2001 to implement the method for controlling a robotic arm provided in the foregoing method embodiments.

In an exemplary embodiment, a computer-readable storage medium is provided, storing a computer program, the computer program, when executed by a processor, implementing the method for controlling a robotic arm.

In an embodiment, the computer-readable storage medium may include: a read-only memory (ROM), a random-access memory (RAM), a solid-state drive (SSD), an optical disc, or the like. The RAM may include a resistance random access memory (ReRAM) and a dynamic random-access memory (DRAM).

In an exemplary embodiment, a computer program product is further provided, the computer program product including a computer program, the computer program being stored in a computer-readable storage medium. A processor of a robot reads the computer program from the computer-readable storage medium, and the processor executes the computer program, to cause the robot to perform the method for controlling a robotic arm.

"A plurality of" mentioned in the specification means two or more. "And/or" describes an association relationship for describing associated objects and represents that three relationships may exist. For example, A and/or B may represent the following three cases: Only A exists, both A and B exist, and only B exists. The character "/" in this specification generally indicates an "or" relationship between the associated objects.

The foregoing descriptions are merely examples of embodiments of the present disclosure but are not intended to limit the present disclosure.

**Claims**

1. A method for controlling a robotic arm, executable by a computer device, the method comprising:

   obtaining N previous input-output pairs, each for a respective one of N different previous moments, wherein each of the previous input-output pairs comprises a previous input and a previous output, the previous input is configured for controlling movement of a robotic arm, so as to keep a first object to be balanced on the robotic arm, the previous output represents a first pose of the robotic arm and a second pose the first object, which are after the movement of the robotic arm, and N is a positive integer;
   determining a predicted input for controlling the robotic arm according to the N previous input-output pairs; and
   controlling, using the predicted input, the movement of the robotic arm in a preset time period after the current moment, so as to keep the first object balanced during the movement of the robotic arm in the time period.

2. The method according to claim 1, wherein determining the predicted input for controlling the robotic arm at the current moment according to the N previous input-output pairs comprises:

   determining a constraint function and a cost function for the robotic arm according to the N previous input-output data pairs, wherein the constraint function represents a constraint on data, the cost function represents a difference between predicted data and balance data, the balance data comprises an input to the robotic arm and at an output presenting a pose of the robotic arm and a pose of the first object when the robotic arm and the first object arm are in a target balanced state, the predicted data comprises the predicted input and a predict output representing a predicted pose of the robotic arm and a predicted pose of the first object, and the predicted output is predicted according to the previous outputs;
   calculating a unit impulse response of the robotic arm through the constraint function and the cost function, wherein a reaction of the robotic arm to the predicted input depends on the predicted input and the unit impulse response; and
   determining the predicted input of the robotic arm at the current moment according to the unit impulse response.

3. The method according to claim 2, wherein determining the constraint function and the cost function for the robotic arm according to the N previous input-output pairs comprises:

   determining a first matrix and a second matrix, wherein the first matrix comprises the previous inputs in the N previous input-output pairs, and the second matrix comprises the previous outputs in the N previous input-output pairs;
   determining the constraint function of the robotic arm according to top n rows in the first matrix and top n rows in the second matrix, wherein n is a system order of the robotic arm and is a positive integer; and
   determining the cost function of the robotic arm according to bottom L rows in the first matrix and bottom L rows in the second matrix, wherein L represents a length of prediction horizon of the robotic arm and is a positive integer.
   wherein for each n+L sequential moments, pairs of inputs and outputs at n moments are configured for predicting pairs of inputs and outputs at latter L moments.

4. The method according to claim 3, wherein determining the first matrix and the second matrix comprises:

   determining previous inputs from an $(i-1)^{th}$ moment to an $(N-L-n+i-1)^{th}$ moment in the N moments to serve as elements, respectively, in an $i^{th}$ row of the first matrix; and
   determining previous outputs from an $(i-1)^{th}$ moment to an $(N-L-n+i-1)^{th}$ moment in the N moments to serve as elements, respectively, in an $i^{th}$ row of the second matrix,
   wherein i is a positive integer.

5. The method according to claim 3, wherein:

the constraint function comprises a first constraint function, a second constraint function, a third constraint function, and a fourth constraint function, and

determining the constraint function of the robotic arm according to the top n rows in the first matrix and the top n rows in the second matrix comprises:

constructing the first constraint function using a slack variable, wherein the slack variable represents measurement noise, and the first constraint function is configured for limiting interference of the measurement noise on the predicted input;

constructing the second constraint function using the top n rows in the first matrix and the top n rows in the second matrix, wherein the second constraint function is configured for limiting the previous input-output pairs at n moments in the N moments;

constructing the third constraint function using the top n rows in the first matrix, the top n rows in the second matrix, and the balance data, wherein the third constraint function is configured to limit that the robotic arm approximates the target balanced state gradually over time; and

constructing the fourth constraint function using the slack variable, a first threshold, and the unit impulse response, wherein the first threshold is an upper limit of the slack variable, and the fourth constraint function is configured for limiting that the predicted input converges.

6. The method according to claim 3, wherein determining the cost function of the robotic arm according to the bottom L rows in the first matrix and the bottom L rows in the second matrix comprises:

determining a function of a first norm using the bottom L rows in the first matrix and the bottom L rows in the second matrix, wherein the first norm comprises a square Euclidean norm of the previous inputs at latter L moments in the N moments and a square Euclidean norm of the previous outputs at the latter L moments in the N moments;

determining a function of a first penalty according to a first penalty weight, a first threshold, and a first regularization term, wherein the first regularization term represents a regularization penalty due to the unit impulse response, the first penalty weight is a weight for the first regularization term, the first threshold is an upper limit of a slack variable, and the slack variable represents measurement noise;

determining a function of a second penalty according to a second penalty weight and a second regularization term, wherein the second regularization term represents a regularization penalty due to the slack variable, and the second penalty weight is a weight for the second regularization term; and

determining the cost function according to the function of the first norm, the function of the first penalty, and the function of the second penalty.

7. The method according to claim 2, wherein determining the predicted input of the robotic arm at the current moment according to the unit impulse response comprises:

determining a third matrix according to the N previous input-output pairs, wherein the third matrix comprises a first matrix and a second matrix, the first matrix comprises the previous inputs in the N previous input-output pairs, and the second matrix comprises the previous outputs in the N previous input-output pairs; and

calculating the predicted input of the robotic arm at the current moment according to the unit impulse response and the third matrix.

8. The method according to claim 7, wherein calculating the predicted input of the robotic arm at the current moment according to the unit impulse response and the third matrix comprises:

determining a dynamics equation of the robotic arm according to a movement parameter of the first object and a movement parameter of the robotic arm, wherein each movement parameter comprises at least a parameter determining kinetic energy or potential energy, the dynamics equation comprises an underactuated equation and an actuated equation, the underactuated equation governs a part of which an input torque is 0, and the actuated equation art governs another part of which an input torque is not 0;

determining a state-space representation of the robotic arm according to the underactuated equation and the third matrix, wherein the state-space representation represents a movement state of the robotic arm; and

calculating the predicted input of the robotic arm at the current moment according to the state-space representation and the actuated equation;

wherein the movement parameter comprises at least one of: a length of the robotic arm, a dimension of the first object, a mass of the robotic arm, a mass of the first object, a moment of inertia of the robotic arm, and a moment of inertia of the first object.

9. The method according to claim 8, wherein calculating the predicted input of the robotic arm at the current moment according to the state-space representation and the actuated equation comprises:

calculating an input torque according to the state-space representation and the actuated equation, wherein the input torque is configured for controlling rotation of a joint of the robotic arm; and
determining the input torque to serve as the predicted input of the robotic arm at the current moment.

10. The method according to claim 8, wherein determining the dynamics equation of the robotic arm according to the movement parameter of the first object and the movement parameter of the robotic arm comprises:

determining an initial dynamics equation of the robotic arm according to the movement parameter of the first object and the movement parameter of the robotic arm; and
performing partial feedback linearization on the initial dynamics equation to obtain the dynamics equation, wherein the partial feedback linearization comprises linear approximation on the initial dynamics equation.

11. The method according to claim 7, wherein calculating the predicted input of the robotic arm at the current moment according to the unit impulse response and the third matrix comprises:

calculating a rotation angular velocity of a joint of the robotic arm according to the unit impulse response and the third matrix; and
determining the rotation angular velocity to serve as the predicted input of the robotic arm at the current moment.

12. The method according to claim 1, further comprising:

obtaining respective previous input-output pairs of consecutive previous moments before the current moment; and
sampling the N previous input-output pairs uniformly from the previous input-output pairs of the consecutive previous moments.

13. The method according to claim 1, wherein obtaining the N respective previous input-output pairs of N different previous moments comprises:

obtaining, for a $j^{th}$ moment in the N moments, the previous input of the $j^{th}$ moment, j being a positive integer less than or equal to N;
determining a pose of the robotic arm, which is after the robotic arm moves according to the previous input of the $j^{th}$ moment;
obtaining a first position of the first object on the robotic arm via a tactile sensor;
obtaining an image of the first object at the $j^{th}$ moment;
obtaining a second position of the first object on the robotic arm according to the image of the first object;
determining a position of a centroid of the first object based according to the first position and the second position; and
determining the previous output of the robotic arm of the $j^{th}$ moment according to the centroid position of the first object and the pose of the robotic arm.

14. An apparatus for controlling a robotic arm, comprising:

an obtaining module, configured for obtaining N respective previous data pairs of N different previous moments, wherein each of the previous input-output pairs comprises a historical input and a previous output, the previous input is configured for controlling movement of a robotic arm, the movement of the robotic arm is configured for keeping a first object to be balanced on the robotic arm, the previous output represents a first pose of the robotic arm and a second pose the first object, which are after the movement of the robotic arm, and N is a positive integer;
a determining module, configured for determining a predicted input for controlling the robotic arm according to the N previous input-output pairs; and
a controlling module configured for controlling, using the predicted input, the movement of the robotic arm in a preset time period after the current moment, so as to keep the first object balanced during the movement of the robotic arm in the time period.

15. A robotic arm, comprising a processor and a memory, wherein the memory stores a computer program, and the computer program, when loaded and executed by the processor, implements the method according to any one of claims 1 to 13.

16. A computer-readable storage medium, storing a computer program, wherein the computer program, when loaded and executed by a processor, implements the method according to any one of claims 1 to 13.

17. A computer program product, comprising a computer program, wherein the computer program is stored in a computer-readable storage medium, and the computer program, when read from computer-readable storage medium and executed by a processor, implements the method according to any one of claims 1 to 13.

110

Obtain N previous input-output pairs, each for a respective one of N different previous moments, where each of the previous input-output pairs comprises a previous input and a previous output, the previous input is configured for controlling movement of a robotic arm, so as to keep a first object to be balanced on the robotic arm, the previous output represents a first pose of the robotic arm and a second pose the first object after the movement of the robotic arm, and N is a positive integer

120

Determine a predicted input for controlling the robotic arm, according to the N previous input-output pairs

130

Control, using the predicted input, the movement of the robotic arm in a preset time period after the current moment, so as to keep the first object balanced during the movement of the robotic arm in the time period

FIG. 1

FIG. 2

FIG. 3

Reference: (us, y)ₛ at L moments $\quad\quad$ u$_{[t-N,\ t-1]}$ $\quad\quad$ y$_{[t-N,\ t-1]}$ $\quad\quad$ R,Q

DD MPC

N: Length of history data
n: System order
L: Horizon
m: Quantity of inputs
p: Quantity of outputs

Diagonalization

u_measure

y_measure

Data of latest n moments, and combine the data into b$_{eq}$

$H_{L+n}(u^d)$ $\quad$ $H_{L+n}(y^d)$ $\quad$ diag(R,Q)

Take top n*m rows | Take bottom L*m rows | Take top n*p rows | Take bottom L*p rows

$H_n(u^d)$ $\quad$ $H_L(u^d)$ $\quad$ $H_n(y^d)$ $\quad$ $H_L(y^d)$

b$_{eq}$ $\quad$ H$_n$ $\quad\quad$ H$_L$

Gradient —— Hessien

Quadratic programming issue: restraint: b$_{eq}$=H$_n$*α $\quad$ Cost function: α$^T$Hessα+α$^T$Gradient

α

×H$_L$

[u$_L$, y$_L$]

Take predicted u at the 1$^{st}$ moment in L future moments

u

PLANT

Feedback and real-time update for predicting data of a next moment

y

## FIG. 4

510

520

s

530

θ

## FIG. 5

| Ref balance point | + − | Controller | | Partial feedback linearization | | Robotic arm | |

FIG. 6

FIG. 7

FIG. 8

FIG. 9

FIG. 10

FIG. 11

FIG. 12

FIG. 13

FIG. 14

FIG. 15

2.9
2.10
2.20
2.21
2.22
2.15
2.16
2.23
2.17
2.24
2.11
2.13
2.26
2.12
2.14
2.18
2.19

FIG. 16

2.28
2.29
2.30
2.23
2.31

FIG. 17

1800

Obtaining module 1810

Determining module 1820

Controlling module 1830

FIG. 18

1800

Obtaining module 1810

Determining module 1820

Constructing unit 1821

Calculating unit 1822

Determining unit 1823

Controlling module 1830

Acquiring module 1840

FIG. 19

2000

2001

Processor

2002

Memory

FIG. 20

## INTERNATIONAL SEARCH REPORT

| International application No. |
| --- |
| **PCT/CN2024/120249** |

### A. CLASSIFICATION OF SUBJECT MATTER

B25J 9/16(2006.01)i

According to International Patent Classification (IPC) or to both national classification and IPC

### B. FIELDS SEARCHED

Minimum documentation searched (classification system followed by classification symbols)

IPC:B25J

Documentation searched other than minimum documentation to the extent that such documents are included in the fields searched

Electronic data base consulted during the international search (name of data base and, where practicable, search terms used)

CNTXT, ENTXT, DWPI, CNKI: 机械臂, 平衡, 历史, 数据, 位姿, 预测, 约束函数, 代价函数, robot, arm, balance, history, data, pose, position, predict+, constraint, function, cost

### C. DOCUMENTS CONSIDERED TO BE RELEVANT

| Category* | Citation of document, with indication, where appropriate, of the relevant passages | Relevant to claim No. |
| --- | --- | --- |
| PX | CN 117207194 A (TENCENT TECHNOLOGY (SHENZHEN) CO., LTD.) 12 December 2023 (2023-12-12) entire document | 1-17 |
| A | CN 109807886 A (NORTHWESTERN POLYTECHNIC UNIVERSITY) 28 May 2019 (2019-05-28) description, paragraphs 0002-0073, and figures 1-4 | 1-17 |
| A | CN 115946112 A (HARBIN INSTITUTE OF TECHNOLOGY, SHENZHEN) 11 April 2023 (2023-04-11) entire document | 1-17 |
| A | CN 113510701 A (SHENZHEN INSTITUTE OF ADVANCED TECHNOLOGY) 19 October 2021 (2021-10-19) entire document | 1-17 |
| A | CN 112070835 A (CLOUDMINDS ROBOTICS CO., LTD.) 11 December 2020 (2020-12-11) entire document | 1-17 |
| A | US 2007146371 A1 (DARIUSH BEHZAD) 28 June 2007 (2007-06-28) entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 November 2024** | **02 January 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/120249**

| Patent document cited in search report | | | Publication date (day/month/year) | Patent family member(s) | | | Publication date (day/month/year) |
|---|---|---|---|---|---|---|---|
| CN | 117207194 | A | 12 December 2023 | None | | | |
| CN | 109807886 | A | 28 May 2019 | None | | | |
| CN | 115946112 | A | 11 April 2023 | None | | | |
| CN | 113510701 | A | 19 October 2021 | None | | | |
| CN | 112070835 | A | 11 December 2020 | None | | | |
| US | 2007146371 | A1 | 28 June 2007 | US | 7859540 | B2 | 28 December 2010 |
| | | | | JP | 2009521334 | A | 04 June 2009 |
| | | | | JP | 5210883 | B2 | 12 June 2013 |
| | | | | WO | 2007076118 | A2 | 05 July 2007 |
| | | | | WO | 2007076118 | A3 | 08 May 2008 |

Form PCT/ISA/210 (patent family annex) (July 2022)

**REFERENCES CITED IN THE DESCRIPTION**

**Patent documents cited in the description**

- CN 2023112991432